# EUROPEAN PATENT APPLICATION

(11) **EP 4 529 249 A1**
(43) Date of publication of application: **26.03.2025**
(21) Application number: 22945357.6
(22) Date of filing: 10.06.2022
(51) Int. Cl.: H04W 12/08, H04W 48/16, H04W 88/08, H04L 9/40

(54) **WIRELESS COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: LUO, Chaoming, Dongguan, Guangdong 523860 (CN); HUANG, Lei, Singapore 049483 (SG)
(74) Representative: RGTH
(86) International application number: PCT/CN2022/098256
(87) International publication number: WO 2023/236216

(57) **Abstract**

Embodiments of the present application provide a wireless communication method and device, which specify interaction between the AP and the STA in a case where they support client privacy enhancement features and basic service set privacy enhancement features. Specifically, for example, it is specified that, in a case where an SSID is changed, how a privacy enhanced AP is compatible with a STA that does not support the basic service set privacy enhancement features, so as to effectively protect the user's privacy in a case where the STA interacts with the AP.

## Description

### TECHNICAL FIELD

Embodiments of the present application relate to the field of communications, and more specifically, to wireless communication methods and devices.

### BACKGROUND

Access points (APs) and stations (STAs) may maintain management information base (MIB) variables locally, such as a set of basic service set privacy enhancement (BPE) features and a set of client privacy enhancement (CPE) features. However, how to divide specific features in the set of basic service set privacy enhancement features and the set of client privacy enhancement features to support different feature selections is an urgent problem to be solved.

### SUMMARY

Embodiments of the present application provide wireless communication methods and devices, which can reasonably divide specific features in a set of basic service set privacy enhancement features and/or a set of client privacy enhancement features to support different feature selections.

In a first aspect, a wireless communication method is provided, and the method includes:
maintaining, by a station (STA), a set of basic service set privacy enhancement features and/or a set of client privacy enhancement features;
where the set of client privacy enhancement features includes a first subset of features and/or a second subset of features, and the set of basic service set privacy enhancement features includes at least one of a third subset of features, a fourth subset of features or a fifth subset of features;
where the first subset of features includes at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of the STA that are randomly changed; protected source address and destination address; or a protected private MAC address of the STA;
where the second subset of features includes at least one of the following features: a privacy enhancement feature for preventing fingerprint analysis; a reduced beacon frame; a protected association request or protected association response frame, and a protected reassociation request or protected reassociation response frame; a frame sequence number, a scrambler seed, a packet number for encryption and a traffic identifier (TID) of the STA that are randomly changed; or a protected MAC header;
where the third subset of features includes at least one of the following features: protected source address and destination address; or a changed service set identifier (SSID);
where the fourth subset of features includes at least one of the following features: a changed SSID; obfuscation of parameter information of the AP in an access point multi-link device (AP MLD) or multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
where the fifth subset of features includes at least one of the following features: a sensing specific MAC address of the STA, or a ranging specific MAC address of the STA.

In a second aspect, a wireless communication method is provided, and the method includes:
maintaining, by an AP, a set of basic service set privacy enhancement features and/or a set of client privacy enhancement features;
where the set of client privacy enhancement features includes a first subset of features and/or a second subset of features, and the set of basic service set privacy enhancement features includes at least one of a third subset of features, a fourth subset of features or a fifth subset of features;
where the first subset of features includes at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of a station (STA) that are randomly changed; protected source address and destination address; or a protected private MAC address of the STA;
where the second subset of features includes at least one of the following features: a privacy enhancement feature for preventing fingerprint analysis; a reduced beacon frame; a protected association request or protected association response frame, and a protected reassociation request or protected reassociation response frame; a frame sequence number, a scrambler seed, a packet number for encryption and a traffic identifier (TID) of the STA that are randomly changed; or a protected MAC header;
where the third subset of features includes at least one of the following features: protected source address and destination address; or a changed service set identifier (SSID);
where the fourth subset of features includes at least one of the following features: a changed SSID; obfuscation of parameter information of the AP in an access point multi-link device (AP MLD) or multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
where the fifth subset of features includes at least one of the following features: a sensing specific MAC address of the STA, or a ranging specific MAC address of the STA.

In a third aspect, a STA is provided for performing the method in the first aspect.

Specifically, the STA includes a functional module for performing the method in the first aspect.

In a fourth aspect, an AP is provided for performing the method in the second aspect.

Specifically, the AP includes a functional module for performing the method in the second aspect.

In a fifth aspect, a STA is provided, including a processor and a memory. The memory is used to store a computer program, and the processor is used to invoke and execute the computer program stored in the memory to cause the STA to perform the method in the first aspect.

In a sixth aspect, an AP is provided, including a processor and a memory. The memory is used to store a computer program, and the processor is used to invoke and execute the computer program stored in the memory to cause the AP to perform the method in the second aspect.

In a seventh aspect, an apparatus is provided for implementing the method in any one of the first aspect and the second aspect.

Specifically, the apparatus includes a processor to invoke a computer program from a memory and execute the computer program to cause a device equipped with the apparatus to perform the method in any one of the first aspect and the second aspect.

In an eighth aspect, a computer-readable storage medium is provided for storing a computer program, and the computer program causes a computer to perform the method in any one of the first aspect and the second aspect.

In a ninth aspect, a computer program product is provided, including computer program instructions, and the computer program instructions cause a computer to perform the method in any one of the first aspect and the second aspect.

In a tenth aspect, a computer program is provided, and the computer program, when executed on a computer, causes the computer to perform the method in any one of the first aspect and the second aspect.

Through the technical solution of the first aspect, the set of basic service set privacy enhancement features maintained by the STA includes the first subset of features and/or the second subset of features, and the set of basic service set privacy enhancement features maintained by the STA includes at least one of the third subset of features, the fourth subset of features or the fifth subset of features. By reasonably dividing into different subsets of features, different feature selections may be supported.

Through the technical solution of the second aspect, the set of basic service set privacy enhancement features maintained by the AP includes the first subset of features and/or the second subset of features, and the set of basic service set privacy enhancement features maintained by the AP includes at least one of the third subset of features, the fourth subset of features or the fifth subset of features. By reasonably dividing into different subsets of features, different feature selections may be supported.

### BRIEF DESCRIPTION OF THE DRAWINGS

FIG. 1 is a schematic diagram of a communication system architecture applied in embodiments of the present application.
FIG. 2 is a schematic flowchart of a wireless communication method provided according to embodiments of the present application.
FIG. 3 is a schematic diagram of an extended capabilities element provided according to embodiments of the present application.
FIG. 4 is a schematic diagram of a robust security network extension element provided according to embodiments of the present application.
FIG. 5 is a schematic diagram of a beacon frame or a probe response frame provided according to embodiments of the present application.
FIG. 6 is a schematic diagram of a probe request frame provided according to the embodiments of present application.
FIG. 7 is a schematic diagram of a probe response frame provided according to the embodiments of present application.
FIG. 8 is a schematic flowchart of another wireless communication method provided according to embodiments of the present application.
FIG. 9 is a schematic block diagram of a STA provided according to embodiments of the present application.
FIG. 10 is a schematic block diagram of an AP provided according to embodiments of the present application.
FIG. 11 is a schematic block diagram of a communication device provided according to embodiments of the present application.
FIG. 12 is a schematic block diagram of an apparatus provided according to embodiments of the present application.
FIG. 13 is a schematic block diagram of a communication system provided according to embodiments of the present application.

### DETAILED DESCRIPTION

The technical solutions in the embodiments of the present application will be described below in conjunction with the drawings in the embodiments of the present application. Obviously, the described embodiments are some embodiments of the present application, rather than all of the embodiments. For the embodiments of the present application, all other embodiments obtained by those of ordinary skill in the art without creative efforts shall fall within the scope of protection of the present application.

The technical solutions of the embodiments of the present application may be applied to various communication systems, such as a wireless local area network (WLAN), a wireless fidelity (WIFI) or other communication systems.

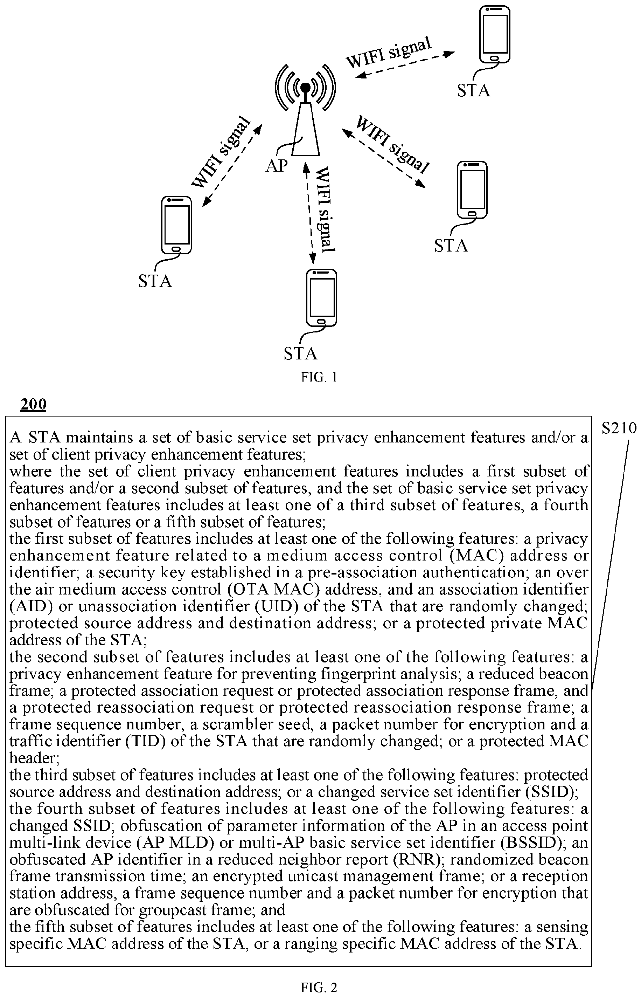

Attention now is invited to FIG. 1, which shows a schematic diagram of a wireless communication system provided by embodiments of the present application. As shown in FIG. 1, the wireless communication system may include an access point (AP) and stations (STAs).

In some scenarios, the AP may be referred to as an AP STA. That is, in a sense, the AP is also a STA. In some scenarios, the STAs are referred to as non-AP STAs.

In some embodiments, the STAs may include the AP STA and the non-AP STA. The communication in the communication system may be communication between the AP and the non-AP STA, communication between the non-AP STA and the non-AP STA, or communication between the STA and a peer STA. The peer STA here may refer to a device for peer communication with the STA. For example, the peer STA may be the AP or the non-AP STA.

The AP is equivalent to a bridge connecting a wired network and a wireless network, and its main function is to connect various wireless network clients together and then connect the wireless network to Ethernet. An AP device may be a terminal device (such as a mobile phone) or network device (such as a router) with a wireless-fidelity (WIFI) chip.

It should be understood that a role of the STA in the communication system is not absolute. For example, in some scenarios, in a case where the mobile phone is connected to the router, the mobile phone is a non-AP STA. In a case where the mobile phone serves as a hotspot for other mobile phones, the mobile phone plays the role of an AP.

The AP and non-AP STAs may be devices used in Internet of Vehicles; Internet of Things (IoT) nodes and sensors in the IoT; smart cameras, smart remote controls, smart water and electricity meters in a smart home; and sensors in a smart city.

In some embodiments, the non-AP STAs may support 802.11be standard. The non-AP STAs may also support various current and future 802.11 family wireless local area network standards, such as 802.11ax, 802.11ac, 802.11n, 802.11g, 802.11b and 802.11a.

In some embodiments, the AP may be a device supporting the 802.11be standard. The AP may also be a device that supports various current and future 802.11 family WLAN standards, such as 802.11ax, 802.11ac, 802.11n, 802.11g, 802.11b and 802.11a.

In the embodiments of the present application, the STA may be a mobile phone, a pad, a computer, a virtual reality (VR) device, an augmented reality (AR) device, a wireless device in industrial control, a set-top box, a wireless device in self driving, a vehicle-mounted communication device, a wireless device in remote medical, a wireless device in smart grid, a wireless device in transportation safety, a wireless device in a smart city, or a wireless device in a smart home, a wireless communication chip, an application specific integrated circuit (ASIC), a system on chip (SOC), etc. that supports WLAN/WIFI technology.

The bands supported by WLAN technology may include but are not limited to, low bands (2.4 GHz, 5 GHz, 6 GHz) and high bands (45 GHz, 60 GHz).

There are one or more links between the station and the access point. In some embodiments, the stations and access point support multi-band communications, for example, communicating simultaneously on the 2.4 GHz, 5 GHz, 6 GHz, 45 GHz, and 60 GHz bands, or communicating simultaneously on different channels in the same band (or different bands), to improve communication throughput and/or reliability between devices. Such a device is usually called a multi-band device, or a multi-link device (MLD), and is sometimes also called a multi-link entity or a multi-band entity. The multi-link device may be an access point device or a station device. In a case where the multi-link device is the access point device, the multi-link device includes one or more APs; and in a case where the multi-link device is the station device, the multi-link device includes one or more non-AP STAs.

A multi-link device including one or more APs may be referred to as an AP, and a multi-link device including one or more non-AP STAs may be referred to as a non-AP.

In the embodiments of the present application, the AP may include a plurality of APs, the non-AP may include a plurality of STAs, a plurality of links may be formed between the APs in the AP and the STAs in the non-AP, and data communication may be performed between the APs in the AP and corresponding STAs in the non-AP through corresponding links.

The AP is a device deployed in the wireless local area network to provide wireless communication functions for the STA. The station may include: a user equipment (UE), an access terminal, a user unit, a user station, a mobile station, a mobile platform, a remote station, a remote terminal, a mobile device, a wireless communication device, a user agent or a user apparatus. Optionally, the station may also be a cellular phone, a cordless phone, a session initiation protocol (SIP) phone, a wireless local loop (WLL) station, a personal digital assistant (PDA), a handheld device with the wireless communication function, a computing device or other processing device connected to a wireless modem, a vehicle-mounted device, or a wearable device, which is not limited in the embodiments of the present application.

Optionally, both the station and the access point support the IEEE 802.11 standard.

It should be understood that the terms "system" and "network" are often used interchangeably herein. The term "and/or" herein is merely a description of the association relationship of associated objects, indicating that there may be three relationships. For example, A and/or B may mean three cases: A alone, A and B both, and B alone. In addition, the character "/" herein generally indicates that association objects before and after it are in an "or" relationship.

It should be understood that the "indication" mentioned in the embodiments of the present application may be a direct indication, an indirect indication, or an indication of an associated relationship. For example, A indicates B, which may mean that A directly indicates B, for example, B may be obtained through A; it may also mean that A indirectly indicates B, for example, A indicates C, and B may be obtained through C; it may also mean that there is an association relationship between A and B.

The terms used in the implementation section of the present application are only used to explain the specific embodiments of the present application and are not intended to limit the present application. The terms "first", "second", "third" and "fourth" etc. in the specification, claims and drawings of the present application are used to distinguish different objects rather than to describe a specific order. In addition, the terms "include", "comprise", and "have", and any variations thereof, are intended to cover a non-exclusive inclusion.

In the description of the embodiments of the present application, the term "corresponding" may indicate that there is a direct or indirect correspondence between two items, or an association relationship between the two items, or a relationship of indicating and being indicated, configuring and being configured, etc.

In the embodiments of the present application, "predefined" or "preconfigured" may be implemented by pre-saving corresponding codes, tables or other manners that may be used to indicate relevant information in a device (for example, including the STA and the network device). The present application does not limit its specific implementation. For example, predefined may refer to defined in the protocol.

In the embodiments of the present application, the "protocol" may refer to a standard protocol in the communication field, for example, it may include a WiFi protocol and related protocols used in future WiFi communication systems, which is not limited in the present application.

In order to facilitate understanding of the technical solutions of the embodiments of the present application, the technical solutions of the present application are described in detail below through specific embodiments. The following related technologies may be arbitrarily combined with the technical solutions of the embodiments of the present application as optional solutions, which all belong to the protection scope of the embodiments of the present application. The embodiments of the present application include at least part of the following contents.

Wireless devices support multi-band communications, for example, communicating simultaneously on 2.4 GHz, 5 GHz, 6 GHz, 45 GHz, and 60 GHz bands, or communicating simultaneously on different channels in the same band (or different bands), to improve communication throughput and/or reliability between devices. Such a device is usually called a multi-band device, or a multi-link device (MLD), and is sometimes also called a multi-link entity or a multi-band entity. A multi-link device may be an access point device or a station device. In a case where the multi-link device is the access point device, the multi-link device includes one or more APs; and in a case where the multi-link device is the station device, the multi-link device includes one or more non-AP STAs.

In order to facilitate understanding of the technical solutions of the embodiments of the present application, the passive scanning and active scanning related to the present application are explained below.

In the infrastructure basic service set (BSS) network, the station (STA) may discover the access point (AP) through the passive scanning and/or active scanning.

The passive scanning means that the station discovers the access point by staying on a certain channel and receiving beacon frames transmitted by the access point. The station can also discover more access points by switching the channel. In infrastructure networks, the access points periodically transmit beacon frames to advertise their presence and capabilities to nearby stations. The beacon frames are broadcast frames, which means that they will be received by all nearby stations. The beacon frame includes rates supported by the access point, encryption capabilities, and other information. Generally, if the access point is set as a hidden network, its beacon frame does not carry service set identifier (SSID) information.

The active scanning means that the station discovers the access point by transmitting a probe request frame and receiving a probe response frame from the access point. The probe request frame is generally transmitted in a broadcast manner (that is, the recipient address carried in the frame is a broadcast address), and the probe response frame is generally transmitted in a unicast manner (that is, the recipient address carried in the frame is an individual address). After receiving the probe response frame, the station needs to respond with an acknowledgment frame (Ack). There are two types of probe requests: a desired SSID probe request and a wildcard SSID probe request. The desired SSID probe request means that a value of a SSID field of the probe request frame is a SSID value of a specific network. The desired SSID probe request is a method for a station to check whether there is a specific network nearby, and is also the only method to identify the existence of a hidden network nearby. Only the access point (AP) whose SSID is consistent with the SSID in the probe request frame will respond with the probe response frame. The wildcard SSID probe request means that a value of a SSID field in the probe request frame is an empty string (that is, a string with a length of 0, and in this case, the SSID value is also called a wildcard SSID). Any access point that receives the probe request frame will respond with a probe response frame.

In order to facilitate understanding of the technical solutions of the embodiments of the present application, the relevant technical solutions and existing problems of the present application are described below.

The access point (AP) and the station (STA) may maintain management information base (MIB) variables locally, such as a set of basic service set privacy enhancement features and a set of client privacy enhancement features. However, how to divide specific features in the set of basic service set privacy enhancement features and the set of client privacy enhancement features to support different feature selections is an urgent problem to be solved.

Specifically, for example, since an SSID of an access point (AP), especially a mobile access point (mobile AP) (such as a mobile phone hotspot, a vehicle-mounted access point), remains unchanged, it may be used to track the access point to obtain its movement trajectory, resulting in leakage of user privacy. As one of a plurality of privacy enhancement features of an access point that supports basic service set privacy enhancement features, one way to solve the problem is to make the access point use a changed or obfuscated SSID, but it is now not yet clear how the access point will be compatible with a station that does not support basic service set privacy enhancement features in a case of using the method.

Based on the above problems, a solution for protecting privacy in the WLAN is proposed in the present application, which can reasonably divide the specific features in the set of basic service set privacy enhancement features and/or the set of client privacy enhancement features to support different feature selections.

The technical solutions of the present application are described in detail below through specific embodiments.

FIG. 2 is a schematic flowchart of a wireless communication method 200 according to embodiments of the present application. As shown in FIG. 2, the wireless communication method 200 may include at least part of the following content.

In S210, a STA maintains a set of basic service set privacy enhancement features and/or a set of client privacy enhancement features. The set of client privacy enhancement features includes a first subset of features and/or a second subset of features, and the set of basic service set privacy enhancement features includes at least one of a third subset of features, a fourth subset of features or a fifth subset of features. The first subset of features includes at least one of the following features: a privacy enhancement feature related to an MAC address or identifier; a security key established in a pre-association authentication; an OTA MAC address, and AID or UID of the STA that are randomly changed; protected source address and destination address; or a protected private MAC address of the STA. The second subset of features includes at least one of the following features: a privacy enhancement feature for preventing fingerprint analysis; a reduced beacon frame; a protected association request or protected association response frame, and a protected reassociation request or protected reassociation response frame; a frame sequence number, a scrambler seed, a packet number for encryption and a TID of the STA that are randomly changed; or a protected MAC header. The third subset of features includes at least one of the following features: protected source address and destination address; or a changed SSID. The fourth subset of features includes at least one of the following features: a changed SSID; obfuscation of parameter information of the AP in an AP MLD or multi-AP BSSID; an obfuscated AP identifier in an RNR; randomized beacon frame transmission time; an encrypted unicast management frame; or a reception station address, a frame sequence number and a packet number for encryption that are obfuscated for groupcast frame. The fifth subset of features includes at least one of the following features: a sensing specific MAC address of the STA, or a ranging specific MAC address of the STA.

In the embodiments of the present application, the set of basic service set privacy enhancement features maintained by the STA includes the first subset of features and/or the second subset of features, and the set of basic service set privacy enhancement features maintained by the STA includes at least one of the third subset of features, the fourth subset of features or the fifth subset of features. By reasonably dividing into different subsets of features, different feature selections may be supported.

In some embodiments, the set of basic service set privacy enhancement features may be an optional set of privacy enhancement features maintained by the STA. That is, in the embodiments of the present application, the STA maintains the set of client privacy enhancement features, or the STA maintains the set of basic service set privacy enhancement features and the set of client privacy enhancement features.

In the embodiments of the present application, a "field" may also be referred to as a "domain" or a "subfield". One field may occupy one or more bytes/octets, or one field may occupy one or more bits.

In the embodiments of the present application, the "set of client privacy enhancement features" may also be referred to as the "set of station-related privacy enhancement features", which is not limited in the present application.

In some embodiments, the STA and the AP locally maintain the MIB variables, and the MIB variables contain the set of basic service set privacy enhancement features and/or the set of client privacy enhancement features. Specifically, a value of the MIB variable is set by an upper layer application within the device or by a user. For example, for the STA, the value of the MIB variable is set by an upper layer application within the STA or by the user. For another example, for the AP, the value of the MIB variable is set by an upper layer application within the AP or by the user.

In some embodiments, in the set of client privacy enhancement features, the first subset of features is a subset of features that is mandatorily supported by the STA, and/or the second subset of features is a subset of features that is optionally supported by the STA. For example, in the set of client privacy enhancement features, subsets of features may be divided according to relevance between the features.

In some embodiments, in the set of client privacy enhancement features, the first subset of features is a subset of features that is mandatorily supported by the AP, and/or the second subset of features is a subset of features that is optionally supported by the AP, or the second subset of features is a subset of features that is mandatorily supported by the AP. Specifically, for example, in the set of client privacy enhancement features, subsets of features may be divided according to relevance between the features.

Optionally, dot11CPEImplemented indicates whether a mandatory set of station-related privacy enhancement features (i.e., the first subset of features) is implemented.

Specifically, in the set of client privacy enhancement features, the first subset of features is a mandatory subset of features (denoted as CPE1) for the STA and is indicated by the dot11CPEImplemented, including but not limited to at least one of: a privacy enhancement feature related to an MAC address or identifier (such as protection for an authentication identifier, e.g.,simultaneous authentication of equals password identifies (SAE password ID) and pairwise master key identifier (PMK ID)); a security key established in a pre-association authentication; an over the air medium access control (OTA MAC) address and an association identifier (AID)/unassociation identifier (UID) of the station that are randomly changed; protected source address (SA) and destination address (DA) values; or a protected private medium access control (MAC) address of the station.

Specifically, in the set of client privacy enhancement features, the second subset of features is a mandatory subset of features (denoted as CPE2) for the STA, including but not limited to at least one of: a privacy enhancement feature for preventing fingerprint analysis (such as a reduced probe request frame/reduced probe response frame); a reduced beacon frame; a protected association request frame/protected association response frame, and a protected reassociation request frame/protected reassociation response frame; a frame sequence number (SN), scrambler seed, a packet number (PN) for encryption and a traffic identifier (TID) of the station that are randomly changed; or a protected MAC header.

Optionally, dot11CPEReducedScanningImplemented indicates whether the reduced probe request frame/reduced probe response frame and the reduced beacon frame are implemented.

Optionally, dot11CPEProtectedAssociationImplemented indicates whether the protected association request frame/protected association response frame and the protected reassociation request frame/protected reassociation response frame are implemented.

Optionally, dot11CPERandomNumbersImplemented indicates whether the frame sequence number (SN), the scrambler seed, the packet number (PN) for encryption and the traffic identifier (TID) of the station that are randomly changed are implemented.

Optionally, dot11CPEMACHeaderProtectionImplemented indicates whether the protected MAC header is implemented.

In some embodiments, in the set of basic service set privacy enhancement features, the third subset of features is a subset of features that is optionally supported by the STA, and/or the fourth subset of features is a subset of features that is optionally supported by the STA, and/or the fifth subset of features is a subset of features that is optionally supported by the STA. Specifically, for example, in the set of basic service set privacy enhancement features, the subsets of features may be divided according to relevance between various features.

In some embodiments, in the set of basic service set privacy enhancement features, the third subset of features is a subset of features that is mandatorily supported by the mobile AP, and/or the fourth subset of features is a subset of features that is optionally supported by the AP, and/or the fifth subset of features is a subset of features that is optionally supported by the AP. For example, in the set of basic service set privacy enhancement features, the subsets of features may be divided according to relevance between various features.

In some embodiments, in a case where the AP is a mobile AP (e.g., a mobile phone hotspot or a vehicle-mounted access point), the AP supports at least the third subset of features.

Optionally, dot11BPEImplemented indicates whether a conditionally mandatory set of privacy enhancement features related to the basic service set is implemented.

Optionally, dot11PattialBPESupportActivated indicates whether the access point supports an access of a station that implements partial privacy enhancement features.

Specifically, in the set of basic service set privacy enhancement features, the third subset of features is an optional subset of features (denoted as BPE1) for the STA, indicated by the dot11BPEImplemented, and including but not limited to at least one of: protected source address (SA) and destination address (DA) values; or a changed basic service set identifier (BSSID).

Specifically, in the set of basic service set privacy enhancement features, the fourth subset of features is an optional subset of features (denoted as BPE2) for the STA, including but not limited to at least one of: a changed SSID; an obfuscation of parameter information of the access point in an access point multi-link device (AP MLD) or multiple-AP BSSID; an obfuscated access point identifier in a reduced neighbor report (RNR); a randomized beacon frame transmission time; an encrypted unicast management frame; or a reception station address, a frame sequence number and a packet number for encryption that are obfuscated for groupcast frame.

Optionally, dot11BPERandomSSIDImplemented indicates whether the changed SSID is implemented.

Optionally, dot11BPEAPIdentityEnhancementImplemented indicates whether the obfuscation of parameter information of the access point in the access point multi-link device (AP MLD) or multiple-AP BSSID and the obfuscated access point identifier in the reduced neighbor report (RNR) are implemented.

Optionally, dot11BPEUnicastPMFImplemented indicates whether the encrypted unicast management frame is implemented.

Optionally, dot11BPERandomizedBeaconTransmissionImplemented indicates whether the randomized beacon frame transmission time is implemented.

Optionally, dot11BPEGroupcastPrivacyEnhancementImplemented indicates whether the reception station address, the frame sequence number and the packet number for encryption that are obfuscated for groupcast frame are implemented.

Specifically, in the set of basic service set privacy enhancement features, the fifth subset of features is an optional subset of features (denoted as BPE3) for the STA, including but not limited to at least one of: a sensing specific MAC address of the station; or a ranging specific MAC address of the station.

Optionally, dot11BPEServiceSpecificMACImplemented indicates whether the sensing specific MAC address of the station and the ranging specific MAC address of the station are implemented.

In some embodiments, the above subsets of features supported by the privacy-enhanced AP and the privacy-enhanced STA are shown in Table 1 below.

**Table 1**

| | Subset of features | | | | |
|---|---|---|---|---|---|
| | CPE1 | CPE2 | BPE1 | BPE2 | BPE3 |
| AP | Mandatory support | Mandatory support or optional support | Mobile access point mandatory support | Optional support | Optional support |
| STA | Mandatory support | Optional support | Optional support | Optional support | Optional support |

In some embodiments, the STA and the AP may communicate the basic service set privacy enhancement features and/or the client privacy enhancement features that they support respectively.

In some embodiments, the STA receives a first frame. The first frame includes a first element, and the first element is used to indicate capability information related to the privacy enhancement features of the AP.

Specifically, for example, the STA receives the first frame transmitted by the AP, or the STA receives the first frame transmitted by other STAs, or the STA receives the first frame transmitted by other APs.

In some embodiments, the first element includes but is not limited to at least one of: a client privacy enhancement features supported field, a basic service set privacy enhancement features supported field, a partial basic service set privacy enhancement features supported field, a reduced scanning field, a protected association frame field, a random numbers field, an MAC header protection field, a random SSID field, an AP identity privacy enhancement field, a unicast management frame encryption field, a randomized beacon frame transmission time field, a groupcast frame privacy enhancement field, or a service specific MAC address field.

Specifically, the client privacy enhancement (CPE) features supported field is used to indicate whether the AP supports a mandatory set of privacy enhancement features related to the STA. For example, the client privacy enhancement features supported field occupies 1 bit (of course, it may also occupy more bits). A value of 1 indicates that the AP supports the mandatory set of privacy enhancement features related to the STA, and a value of 0 indicates that the AP does not support the mandatory set of privacy enhancement features related to the STA; or, the value of 0 indicates that the AP supports the mandatory set of privacy enhancement features related to the STA, and the value of 1 indicates that the AP does not support the mandatory set of privacy enhancement features related to the STA. It should be noted that, in a case of implementing the same feature, the client privacy enhancement (CPE) features supported field may also be replaced with other names, which is not limited in the embodiments of the present application.

Specifically, the basic service set privacy enhancement (BPE) features supported field is used to indicate whether the AP supports a mandatory set of privacy enhancement features related to the basic service set. For example, the basic service set privacy enhancement features supported field occupies 1 bit (of course, it may also occupy more bits). A value of 1 indicates that the AP supports the mandatory set of privacy enhancement features related to the basic service set, and a value of 0 indicates that the AP does not support the mandatory set of privacy enhancement features related to the basic service set; or, the value of 0 indicates that the AP supports the mandatory set of privacy enhancement features related to the basic service set, and a value of 1 indicates that the AP does not support the mandatory set of privacy enhancement features related to the basic service set. It should be noted that, in a case of implementing the same feature, the basic service set privacy enhancement (BPE) features supported field may also be replaced with other names, which is not limited in the embodiments of the present application.

Specifically, the partial basic service set privacy enhancement (BPE) features supported field is used to indicate whether the AP supports an access of a STA that implements the partial privacy enhancement features. For example, the partial basic service set privacy enhancement features supported field occupies 1 bit (of course, it may also occupy more bits). A value of 1 indicates that the AP supports an access of STA that implements the partial privacy enhancement features, and a value of 0 indicates that the AP does not support the access of STA that implements the partial privacy enhancement features; or the value of 0 indicates that the AP supports the access of STA that implements the partial privacy enhancement features, and the value of 1 indicates that the AP does not support the access of STA that implements the partial privacy enhancement features. It should be noted that, in a case of implementing the same feature, the partial basic service set privacy enhancement (BPE) feature field may also be replaced with other names, which is not limited in the embodiments of the present application.

Specifically, the reduced scanning field is used to indicate whether the AP supports the reduced probe request frame or reduced probe response frame and the reduced beacon frame. For example, the reduced scanning field occupies 1 bit (of course, it may also occupy more bits). A value of 1 indicates that the AP supports the reduced probe request or reduced probe response frame and the reduced beacon frame, and a value of 0 indicates that the AP does not support the reduced probe request or reduced probe response frame and the reduced beacon frame; or, the value of 0 indicates that the AP supports the reduced probe request or reduced probe response frame and the reduced beacon frame, and the value of 1 indicates that the AP does not support the reduced probe request or reduced probe response frame and the reduced beacon frame. It should be noted that, in a case of implementing the same feature, the reduced scanning field may also be replaced with other names, which is not limited in the embodiments of the present application.

Specifically, the protected association frame field is used to indicate whether the AP supports the protected association request frame or protected association response frame and the protected reassociation request frame or protected reassociation response frame. For example, the protected association frame field occupies 1 bit (of course, it may also occupy more bits). A value of 1 indicates that the AP supports the protected association request frame or protected association response frame and the protected reassociation request frame or protected reassociation response frame, and a value of 0 indicates that the AP does not support the protected association request frame or protected association response frame and the protected reassociation request frame or protected reassociation response frame; or, the value of 0 indicates that the AP supports the protected association request frame or protected association response frame and the protected reassociation request frame or protected reassociation response frame, and the value of 1 indicates that the AP does not support the protected association request frame or protected association response frame and the protected reassociation request frame or protected reassociation response frame. It should be noted that, in a case of implementing the same feature, the protected association frame field may also be replaced with other names, which is not limited in the embodiments of the present application.

Specifically, the random numbers field is used to indicate whether the AP supports the frame sequence number, the scrambler seed, the packet number for encryption and the TID of the STA that are randomly changed. For example, the random numbers field occupies 1 bit (of course, it may also occupy more bits). A value of 1 indicates that the AP supports the frame sequence number, scrambler seed, packet number for encryption and TID of the STA that are randomly changed, and a value of 0 indicates that the AP does not support the frame sequence number, scrambler seed, packet number for encryption and TID of the STA that are randomly changed; or, the value of 0 indicates that the AP supports the frame sequence number, scrambler seed, packet number for encryption and TID of the STA that are randomly changed, and the value of 1 indicates that the AP does not support the frame sequence number, scrambler seed, packet number for encryption and TID of the STA that are randomly changed. It should be noted that, in a case of implementing the same feature, the random numbers field may also be replaced with other names, which is not limited in the embodiments of the present application.

Specifically, the MAC header protection field is used to indicate whether the AP supports the protected MAC header. For example, the MAC header protection field occupies 1 bit (of course, it may also occupy more bits), a value of 1 indicates that the AP supports the protected MAC header, and a value of 0 indicates that the AP does not support the protected MAC header; or, the value of 0 indicates that the AP supports the protected MAC header, and the value of 1 indicates that the AP does not support the protected MAC header. It should be noted that, in a case of implementing the same feature, the MAC header protection field may also be replaced with other names, which is not limited in the embodiments of the present application.

Specifically, the random SSID field is used to indicate whether the AP supports the changed SSID. For example, the random SSID field occupies 1 bit (of course, it may also occupy more bits). A value of 1 indicates that the AP supports the changed SSID, and a value of 0 indicates that the AP does not support the changed SSID; or, the value of 0 indicates that the AP supports the changed SSID, and a value of 1 indicates that the AP does not support the changed SSID. It should be noted that, in a case of implementing the same feature, the random SSID field may also be replaced with other names, which is not limited in the embodiments of the present application.

Specifically, the AP identity privacy enhancement field is used to indicate whether the AP supports the obfuscation of parameter information of the AP in the AP MLD or multi-AP BSSID and the obfuscated AP identifier in the RNR. For example, the AP identity privacy enhancement field occupies 1 bit (of course, it may also occupy more bits). A value of 1 indicates that the AP supports the obfuscation of parameter information of the AP in the AP MLD or multi-AP BSSID and the obfuscated AP identifier in the RNR, and a value of 0 indicates that the AP does not support the obfuscation of parameter information of the AP in the AP MLD or multi-AP BSSID and the obfuscated AP identifier in the RNR; or, the value of 0 indicates that the AP supports the obfuscation of parameter information of the AP in the AP MLD or multi-AP BSSID and the obfuscated AP identifier in the RNR, and the value of 1 indicates that the AP does not support the obfuscation of parameter information of the AP in the AP MLD or multi-AP BSSID and the obfuscated AP identifier in the RNR. It should be noted that, in a case of implementing the same feature, the AP identity privacy enhancement field may also be replaced with other names, which is not limited in the embodiments of the present application.

Specifically, the unicast management frame encryption field is used to indicate whether the AP supports the encrypted unicast management frame. For example, the unicast management frame encryption field occupies 1 bit (of course, it may also occupy more bits). A value of 1 indicates that the AP supports the encrypted unicast management frame, and a value of 0 indicates that the AP does not support the encrypted unicast management frame; or, a value of 0 indicates that the AP supports the encrypted unicast management frame, and a value of 1 indicates that the AP does not support the encrypted unicast management frame. It should be noted that, in a case of implementing the same feature, the unicast management frame encryption field may also be replaced with other names, which is not limited in the embodiments of the present application.

Specifically, the randomized beacon frame transmission time field is used to indicate whether the AP supports the randomized beacon frame transmission time. For example, the randomized beacon frame transmission time field occupies 1 bit (of course, it may also occupy more bits). A value of 1 indicates that the AP supports the randomized beacon frame transmission time, and a value of 0 indicates that the AP does not support the randomized beacon frame transmission time; or, the value of 0 indicates that the AP supports the randomized beacon frame transmission time, and the value of 1 indicates that the AP does not support the randomized beacon frame transmission time. It should be noted that, in a case of implementing the same feature, the randomized beacon frame transmission time field may also be replaced with other names, which is not limited in the embodiments of the present application.

Specifically, the groupcast frame privacy enhancement field is used to indicate whether the AP supports the reception station address, frame sequence number and packet number for encryption that are obfuscated for groupcast frame. For example, the groupcast frame privacy enhancement field occupies 1 bit (of course, it may also occupy more bits). A value of 1 indicates that the AP supports the reception station address, frame sequence number and packet number for encryption that are obfuscated for groupcast frame, and a value of 0 indicates that the AP does not support the reception station address, frame sequence number and packet number for encryption that are obfuscated for groupcast frame; or, the value of 0 indicates that the AP supports the reception station address, frame sequence number and packet number for encryption that are obfuscated for groupcast frame, and the value of 1 indicates that the AP does not support the reception station address, frame sequence number and packet number for encryption that are obfuscated for groupcast frame. It should be noted that, in a case of implementing the same feature, the groupcast frame privacy enhancement field may also be replaced with other names, which is not limited in the embodiments of the present application.

Specifically, the service specific MAC address field is used to indicate whether the AP supports a sensing specific MAC address of a STA and a ranging specific MAC address of a STA. For example, the service specific MAC address field occupies 1 bit (of course, it may also occupy more bits). A value of 1 indicates that the AP supports the sensing specific MAC address of the STA and the ranging specific MAC address of the STA, and a value of 0 indicates that the AP does not support the sensing specific MAC address of the STA and the ranging specific MAC address of the STA; or, the value of 0 indicates that the AP supports the sensing specific MAC address of the STA and the ranging specific MAC address of the STA, and the value of 1 indicates that the AP does not support the sensing specific MAC address of the STA and the ranging specific MAC address of the STA. It should be noted that, in a case of implementing the same feature, the service specific MAC address field may also be replaced with other names, which is not limited in the embodiments of the present application.

In some embodiments, the first element is an extended capabilities element, or the first element is a robust security network element (RSNE), or the first element is a robust security network extension element (RSNXE), or the first element is a newly defined enhanced privacy capabilities element. Of course, the first element may also be other elements, which is not limited in the embodiments of the present application.

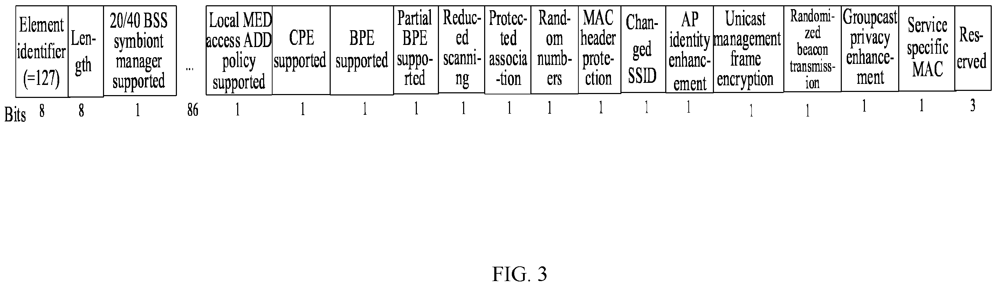

Specifically, for example, in a case where the first element is the extended capabilities element, the first element may be as shown in FIG. 3.

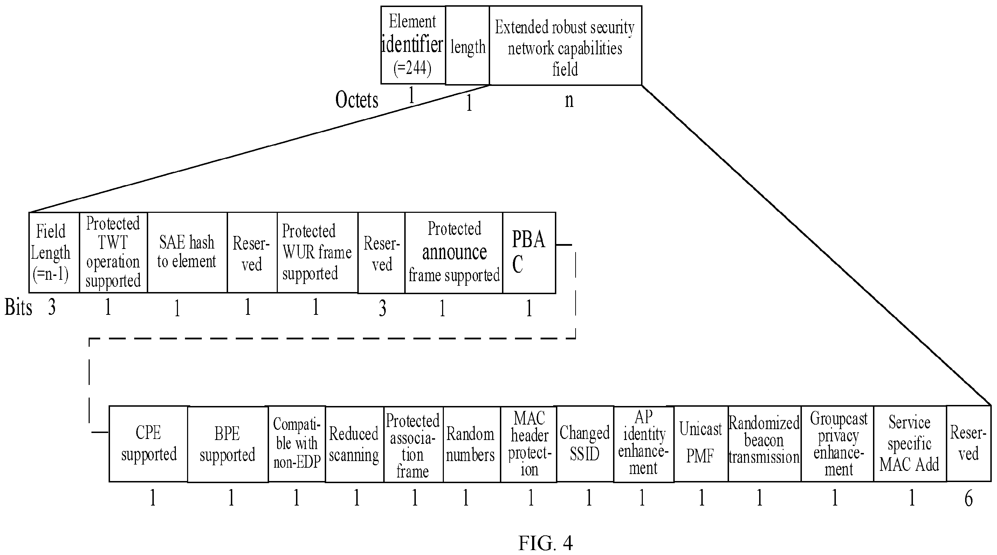

For another specific example, in a case where the first element is the robust security network extension element, the first element may be as shown in FIG. 4, where the first element may also include at least one of: a field length field (occupying 3 bits), a protected target wake time (TWT) operation supported field (occupying 1 bit), a simultaneous authentication of equals (SAE) hash-to-element field (occupying 1 bit), a protected wake up radio (WUR) frame supported field (occupying 1 bit), a protected announce frame supported field (occupying 1 bit), or a policy based access control (PBAC) field (occupying 1 bit).

In some embodiments, the first frame is at least one of: the beacon frame, the probe response frame, the association response frame, or the reassociation response frame. Of course, the first frame may also be other frames, which is not limited in the present application.

In some embodiments, a STA that does not use the client privacy enhancement feature shall not perform a point-to-point signaling (e.g., tunneled direct link setup (TDLS)) interaction with a STA that uses the client privacy enhancement feature.

The signaling interaction between the STA and the AP is described in detail below in the embodiments of the present application through embodiment 1 to embodiment 3.

In embodiment 1, the STA performs the signaling interaction with the AP using a first set of target features; where the first set of target features is an intersection of the set of client privacy enhancement features supported by the STA and the set of client privacy enhancement features supported by the AP.

In some implementations, in a case where the STA supports the first subset of features and the AP supports the first subset of features, the first set of target features is the first subset of features.

In some implementations, in a case where the STA supports the first subset of features and the AP supports the first subset of features and the second subset of features, the first set of target features is the first subset of features.

In some implementations, in a case where the STA supports the first subset of features and the second subset of features and the AP supports the first subset of features, the first set of target features is the first subset of features.

In some implementations, in a case where the STA supports the first subset of features and the second subset of features and the AP supports the first subset of features and the second subset of features, the first set of target features is the first subset of features and the second subset of features.

In some implementations, AP that supports the client privacy enhancement feature does not allow an access of a STA that does not support the client privacy enhancement feature. Specifically, for example, in a case where the STA does not support the first subset of features and the AP supports the first subset of features, the STA does not use the first subset of features to perform the signaling interaction with the AP; and/or, in a case where the STA does not support the first subset of features and the AP supports the first subset of features and the second subset of features, the STA does not use the first subset of features and the second subset of features to perform the signaling interaction with the AP.

In some implementations of embodiment 1, the subset of features supported by the AP and the subset of features supported by the STA may be as shown in Table 2, and under different subset of features, the subset of features used by the STA when performing the signaling interaction with the AP may be as shown in Table 2. In Table 2, CPE1 represents the first subset of features, CPE2 represents the second subset of features, BPE1 represents the third subset of features, BPE2 represents the fourth subset of features, and BPE3 represents the fifth subset of features.

**Table 2**

| | | Subset of features supported by the AP | |
|---|---|---|---|
| | | CPE1 | CPE1 + CPE2 |
| Subset of features supported by STA | Not supporting CPE1 | Not using CPE1 | Not using CPE1 and CPE2 |
| | CPE1 | Using CPE1 | Using CPE1 |
| | CPE1 + CPE2 | Using CPE1 | Using CPE1 + CPE2 |
| | CPE1 + CPE2 + BPE1 | Using CPE1 + CPE2 | Using CPE1 + CPE2 |
| | CPE1 + CPE2 + BPE1 + BPE2 | Using CPE1 + CPE2 | Using CPE1 + CPE2 |
| | CPE1 + CPE2 + BPE1 + BPE2 + BPE3 | Using CPE1 + CPE2 | Using CPE1 + CPE2 |

Specifically, in the above Table 2, in a case where the STA does not support the CPE1 and the AP supports the CPE1, the STA does not use CPE1 to perform the signaling interaction with the AP; and/or, in a case where the STA does not support the CPE1 and the AP supports the CPE1 and CPE2, the STA does not use the CPE1 and CPE2 to perform the signaling interaction with the AP.

Specifically, in the above Table 2, in a case where the STA supports the CPE1 and the AP supports the CPE1, the first set of target features is the CPE1, that is, the STA uses the CPE1 to perform the signaling interaction with the AP.

Specifically, in the above Table 2, in a case where the STA supports the CPE1, and the AP supports the CPE1 and CPE2, the first set of target features is the CPE1, that is, the STA uses the CPE1 to perform the signaling interaction with the AP.

Specifically, in the above Table 2, in a case where the STA supports the CPE1 and CPE2, and the AP supports the CPE1, the first set of target features is the CPE1, that is, the STA uses the CPE1 to perform the signaling interaction with the AP.

Specifically, in the above Table 2, in a case where the STA supports the CPE1 and CPE2, and the AP supports the CPE1 and CPE2, the first set of target features is the CPE1 and CPE2, that is, the STA uses the CPE1 and CPE2 to perform the signaling interaction with the AP.

In some implementations of the embodiment 1, in a case where the AP that supports the client privacy enhancement features does not allow (or does not accept) the access of the STA that does not support the client privacy enhancement features, the above Table 2 may be replaced with the following Table 3, i.e., the row where the "Not supporting CPE1" STA is located in the above Table 2 is removed.

**Table 3**

| | | Subset of features supported by the AP | |
|---|---|---|---|
| | | CPE1 | CPE1 + CPE2 |
| Subset of features supported by STA | CPE1 | Using CPE1 | Using CPE1 |
| | CPE1 + CPE2 | Using CPE1 | Using CPE1 + CPE2 |
| | CPE1 + CPE2 + BPE1 | Using CPE1 + CPE2 | Using CPE1 + CPE2 |
| | CPE1 + CPE2 + BPE1 + BPE2 | Using CPE1 + CPE2 | Using CPE1 + CPE2 |
| | CPE1 + CPE2 + BPE1 + BPE2 + BPE3 | Using CPE1 + CPE2 | Using CPE1 + CPE2 |

In embodiment 2, the STA performs the signaling interaction with the AP using a second set of target features; where the second set of target features is part or all of the set of privacy enhancement features supported by the AP, where the set of privacy enhancement features includes the set of client privacy enhancement features and/or the set of basic service set privacy enhancement features. Further, the AP does not allow an access of a STA that supports fewer set of basic service set privacy enhancement features than the set of basic service set privacy enhancement features supported by the AP.

In some implementations, in a case where the STA supports the first subset of features and the third subset of features, and the AP supports the first subset of features and the third subset of features, the second set of target features is the first subset of features and the third subset of features.

In some implementations, in a case where the STA supports the first subset of features and the third subset of features, and the AP supports the first subset of features, the second subset of features and the third subset of features, the second set of target features is the first subset of features and the third subset of features.

In some implementations, in a case where the STA supports the first subset of features, the second subset of features, and the third subset of features, and the AP supports the first subset of features and the third subset of features, the second set of target features is the first subset of features and the third subset of features.

In some implementations, in a case where the STA supports the first subset of features, the second subset of features, and the third subset of features, and the AP supports the first subset of features, the second subset of features, and the third subset of features, the second set of target features is the first subset of features, the second subset of features, and the third subset of features.

In some implementations, in a case where the STA supports the first subset of features, the second subset of features, the third subset of features and the fourth subset of features, and the AP supports the first subset of features and the third subset of features, the second set of target features is the first subset of features and the third subset of features.

In some implementations, in a case where the STA supports the first subset of features, the second subset of features, the third subset of features, and the fourth subset of features, and the AP supports the first subset of features, the second subset of features, and the third subset of features, the second set of target features is the first subset of features, the second subset of features, and the third subset of features.

In some implementations, in a case where the STA supports the first subset of features, the second subset of features, the third subset of features and the fourth subset of features, and the AP supports the first subset of features, the second subset of features, the third subset of features and the fourth subset of features, the second set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features and the third subset of features, the second set of target features is the first subset of features and the third subset of features.

In some implementations, in a case where the STA supports the first subset of features, the second subset of features, the third subset of features, the fourth subset of features and the fifth subset of features, and the AP supports the first subset of features, the second subset of features and the third subset of features, the second set of target features is the first subset of features, the second subset of features and the third subset of features.

In some implementations, in a case where the STA supports the first subset of features, the second subset of features, the third subset of features, the fourth subset of features and the fifth subset of features, and the AP supports the first subset of features, the second subset of features, the third subset of features and the fourth subset of features, the second set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the second set of target features is the first subset of features, the second subset of features, the third subset of features, the fourth subset of features and the fifth subset of features.

In some implementations, in a case where the STA does not support the first subset of features, the AP does not support the access of the STA.

In some implementations, in a case where the STA supports the first subset of features, and the AP supports the first subset of features and the third subset of features, the AP does not support the access of the STA.

In some implementations, in a case where the STA supports the first subset of features, and the AP supports the first subset of features, the second subset of features and the third subset of features, the AP does not support the access of the STA.

In some implementations, in a case where the STA supports the first subset of features, and the AP supports the first subset of features, the second subset of features, the third subset of features and the fourth subset of features, the AP does not support the access of the STA.

In some implementations, in a case where the STA supports the first subset of features, and the AP supports the first subset of features, the second subset of features, the third subset of features, the fourth subset of features and the fifth subset of features, the AP does not support the access of the STA.

In some implementations, in a case where the STA supports the first subset of features and the third subset of features, and the AP supports the first subset of features, the second subset of features, the third subset of features and the fourth subset of features, the AP does not support the access of the STA.

In some implementations, in a case where the STA supports the first subset of features and the third subset of features, and the AP supports the first subset of features, the second subset of features, the third subset of features, the fourth subset of features and the fifth subset of features, the AP does not support the access of the STA.

In some implementations, in a case where the STA supports the first subset of features, the second subset of features and the third subset of features, and the AP supports the first subset of features, the second subset of features, the third subset of features and the fourth subset of features, the AP does not support the access of the STA.

In some implementations, in a case where the STA supports the first subset of features, the second subset of features and the third subset of features, and the AP supports the first subset of features, the second subset of features, the third subset of features, the fourth subset of features and the fifth subset of features, the AP does not support the access of the STA.

In some implementations, in a case where the STA supports the first subset of features, the second subset of features, the third subset of features and the fourth subset of features, and the AP supports the first subset of features, the second subset of features, the third subset of features, the fourth subset of features and the fifth subset of features, the AP does not support the access of the STA.

In some implementations of the embodiment 2, the subset of features supported by the AP and the subset of features supported by the STA may be as shown in Table 4, and under different subset of features, the subset of features used by the STA when performing the signaling interaction with the AP may be as shown in Table 4. In Table 4, CPE1 represents the first subset of features, CPE2 represents the second subset of features, BPE1 represents the third subset of features, BPE2 represents the fourth subset of features, and BPE3 represents the fifth subset of features. In Table 4, "N" indicates that the AP does not support the access of the corresponding STA.

**Table 4**

| | | Subset of features supported by the AP | | | |
|---|---|---|---|---|---|
| | | CPE1 + BPE1 | CPE1 + BPE1 + CPE2 | CPE1 + BPE1 + CPE2 + BPE2 | CPE1 + BPE1 + CPE2+ BPE2 + BPE3 |
| Subset of features supported by STA | Not supporting CPE1 | N | N | N | N |
| | CPE1 | N | N | N | N |
| | CPE1 + BPE1 | Using CPE1 + BPE1 | Using CPE1 + BPE1 | N | N |
| | CPE1 + BPE1 + CPE2 | Using CPE1 + BPE1 | Using CPE1 + BPE1 + CPE2 | N | N |
| | CPE1 + BPE1 + CPE2 + BPE2 | Using CPE1 + BPE1 | Using CPE1 + BPE1 + CPE2 | Using CPE1 + BPE1 + CPE2 + BPE2 | N |
| | CPE1 + BPE1 + CPE2 + BPE2 + BPE3 | Using CPE1 + BPE1 | Using CPE1 + BPE1 + CPE2 | Using CPE1 + BPE1 + CPE2 + BPE2 | Using CPE1 + BPE1 + CPE2 + BPE2 + BPE3 |

Specifically, in the above Table 4, in a case where the STA does not support the CPE1, and the AP supports the CPE1 and BPE1, the AP does not support the access of the STA.

Specifically, in the above Table 4, in a case where the STA does not support the CPE1, and the AP supports the CPE1, CPE2, and BPE1, the AP does not support the access of the STA.

Specifically, in the above Table 4, in a case where the STA does not support the CPE1, and the AP supports the CPE1, CPE2, BPE1 and BPE2, the AP does not support the access of the STA.

Specifically, in the above Table 4, in a case where the STA does not support the CPE1, and the AP supports the CPE1, CPE2, BPE1, BPE2, and BPE3, the AP does not support the access of the STA.

Specifically, in the above Table 4, in a case where the STA supports the CPE1, and the AP supports the CPE1 and BPE1, the AP does not support the access of the STA.

Specifically, in the above Table 4, in a case where the STA supports the CPE1, and the AP supports the CPE1, CPE2, and BPE1, the AP does not support the access of the STA.

Specifically, in the above Table 4, in a case where the STA supports the CPE1, and the AP supports the CPE1, CPE2, BPE1 and BPE2, the AP does not support the access of the STA.

Specifically, in the above Table 4, in a case where the STA supports the CPE1, and the AP supports the CPE1, CPE2, BPE1, BPE2, and BPE3, the AP does not support the access of the STA.

Specifically, in the above Table 4, in a case where the STA supports the CPE1 and BPE1, and the AP supports the CPE1 and BPE1, the second set of target features is the CPE1 and BPE1, that is, the STA uses the CPE1 and BPE1 to perform the signaling interaction with the AP.

Specifically, in the above Table 4, in a case where the STA supports the CPE1 and BPE1, and the AP supports the CPE1, CPE2 and BPE1, the second set of target features is the CPE1 and BPE1, that is, the STA uses the CPE1 and BPE1 to perform the signaling interaction with the AP.

Specifically, in the above Table 4, in a case where the STA supports the CPE1 and BPE1, and the AP supports the CPE1, CPE2, BPE1 and BPE2, the AP does not support the access of the STA.

Specifically, in the above Table 4, in a case where the STA supports the CPE1 and BPE1, and the AP supports the CPE1, CPE2, BPE1, BPE2 and BPE3, the AP does not support the access of the STA.

Specifically, in the above Table 4, in a case where the STA supports the CPE1, CPE2 and BPE1, and the AP supports the CPE1 and BPE1, the second set of target features is the CPE1 and BPE1, that is, the STA uses the CPE1 and BPE1 to perform the signaling interaction with the AP.

Specifically, in the above Table 4, in a case where the STA supports the CPE1, CPE2 and BPE1, and AP supports the CPE1, CPE2 and BPE1, the second set of target features is the CPE1, CPE2 and BPE1, that is, the STA uses the CPE1, CPE2 and BPE1 to perform the signaling interaction with the AP.

Specifically, in the above Table 4, in a case where the STA supports the CPE1, CPE2 and BPE1, and the AP supports the CPE1, CPE2, BPE1 and BPE2, the AP does not support the access of the STA.

Specifically, in the above Table 4, in a case where the STA supports the CPE1, CPE2 and BPE1, and the AP supports the CPE1, CPE2, BPE1, BPE2 and BPE3, the AP does not support the access of the STA.

Specifically, in the above Table 4, in a case where the STA supports the CPE1, CPE2, BPE1 and BPE2, and the AP supports the CPE1 and BPE1, the second set of target features is the CPE1 and BPE1, that is, the STA uses the CPE1 and BPE1 to perform the signaling interaction with the AP.

Specifically, in the above Table 4, in a case where the STA supports the CPE1, CPE2, BPE1 and BPE2, and AP supports the CPE1, CPE2 and BPE1, the second set of target features is the CPE1, CPE2 and BPE1, that is, the STA uses the CPE1, CPE2 and BPE1 to perform the signaling interaction with the AP.

Specifically, in the above Table 4, in a case where the STA supports the CPE1, CPE2, BPE1 and BPE2, and the AP supports the CPE1, CPE2, BPE1 and BPE2, the second set of target features is the CPE1, CPE2, BPE1 and BPE2, that is, the STA uses the CPE1, CPE2, BPE1 and BPE2 to perform the signaling interaction with the AP.

Specifically, in the above Table 4, in a case where the STA supports the CPE1, CPE2, BPE1 and BPE2, and the AP supports the CPE1, CPE2, BPE1, BPE2 and BPE3, the AP does not support the access of the STA.

Specifically, in the above Table 4, in a case where the STA supports the CPE1, CPE2, BPE1, BPE2 and BPE3, and the AP supports the CPE1 and BPE1, the second set of target features is the CPE1 and BPE1, that is, the STA uses the CPE1 and BPE1 to perform the signaling interaction with the AP.

Specifically, in the above Table 4, in a case where the STA supports the CPE1, CPE2, BPE1, BPE2 and BPE3, and the AP supports the CPE1, CPE2 and BPE1, the second set of target features is the CPE1, CPE2 and BPE1, that is, the STA uses the CPE1, CPE2 and BPE1 to perform the signaling interaction with the AP.

Specifically, in the above Table 4, in a case where the STA supports CPE1, CPE2, BPE1, BPE2 and BPE3, and the AP supports the CPE1, CPE2, BPE1 and BPE2, the second set of target features is the CPE1, CPE2, BPE1 and BPE2, that is, the STA uses the CPE1, CPE2, BPE1 and BPE2 to perform the signaling interaction with the AP.

Specifically, in the above Table 4, in a case where the STA supports the CPE1, CPE2, BPE1, BPE2 and BPE3, and the AP supports the CPE1, CPE2, BPE1, BPE2 and BPE3, the second set of target features is the CPE1, CPE2, BPE1, BPE2 and BPE3, that is, the STA uses the CPE1, CPE2, BPE1, BPE2 and BPE3 to perform the signaling interaction with the AP.

In some implementations of the embodiment 2, a basic service set enhanced privacy access point cannot simultaneously enable a random SSID feature and a feature of compatible with the stations that do not support the random SSID. In a case where the access point (such as a vehicle-mounted access point and/or a mobile hotspot turned on by a mobile phone) is configured by a user to enable the station privacy enhancement feature, the basic service set privacy enhancement feature and the random SSID feature, whether the CPE feature is supported in the access point is set to yes, whether the BPE feature is supported is set to yes, the random SSID feature is set to yes, and the partial BPE supported is set to no. That is, the capability information of the access point is: whether to support the CPE feature being set to yes, whether to support the BPE feature being set to yes, the random SSID feature being set to yes, and the partial BPE supported being set to no.

In the embodiment 2, as an example 1, in a case where the access point is set as a non-hidden network, the beacon frame of the access point carries the capability information of the access point and the changed SSID (denoted as SSID_1, and an original SSID is denoted as SSID_0). In a case where the station transmits a desired SSID probe request (carrying SSID_1) or transmits a wildcard SSID probe request, the access point responds with a probe response frame carrying the access point capability information and the SSID_1. In a case where the station transmits a desired SSID probe request (carrying SSID_0), the access point does not respond. That is to say, in this mode, stations that do not support the random SSID feature can only connect to the access point as a new network (identified by the SSID_1) and cannot connect to it as a network identified by the SSID_0.

In some implementations, the changed SSID is derived from the original SSID using a predefined algorithm, and a station supporting the random SSID feature uses the passive scanning and/or wildcard SSID probe requests. After receiving the probe response frame, the station can associate the indication of the capability information of the access point and SSID_1 with the saved SSID_0, thereby determining that the access point is the access point that needs to be connected.

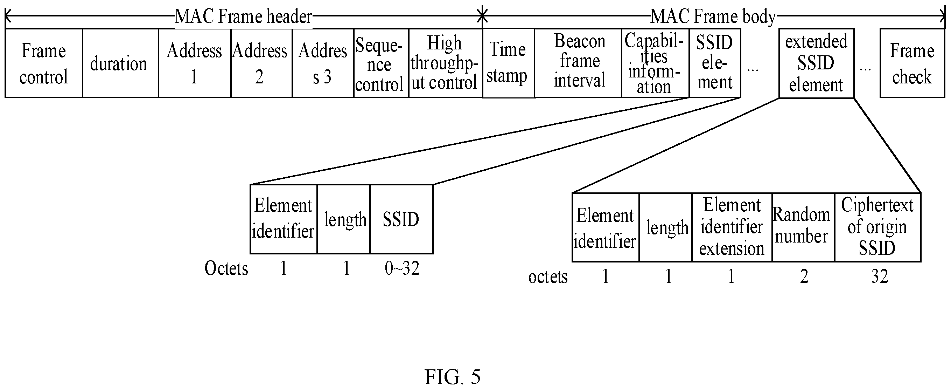

In some implementations, the changed SSID cannot be derived from the original SSID. As shown in FIG. 5, the beacon frame and the probe response frame of the access point carry a capability information field, an SSID element, and an extended SSID element, where the capability information field carries the capability information of the access point, the SSID element carries the changed SSID, the random number field in the extended SSID element carries a random number R1, and a ciphertext field of the original SSID in the extended SSID element carries the ciphertext of the original SSID. The station supporting the random SSID feature uses the passive scanning and/or the wildcard SSID probe requests. After receiving the beacon frame and/or the probe response frame, the station can associate the indication of the capability information of the access point, the random number R1 and the ciphertext of the original SSID with the saved SSID_0, thereby determining that the access point is the access point that needs to be connected. The ciphertext of the original SSID may be generated by symmetric encryption (for example, using the advanced encryption standard (AES) algorithm) of the original SSID using the key of the network and the random number R1, or by using a hash algorithm (for example, the secure hash algorithm (SHA) algorithm), or by using a key derivation algorithm (for example, the hash-based message authentication code-based key derivation function (HKDF) or the password-based key derivation function (PBKDF)).

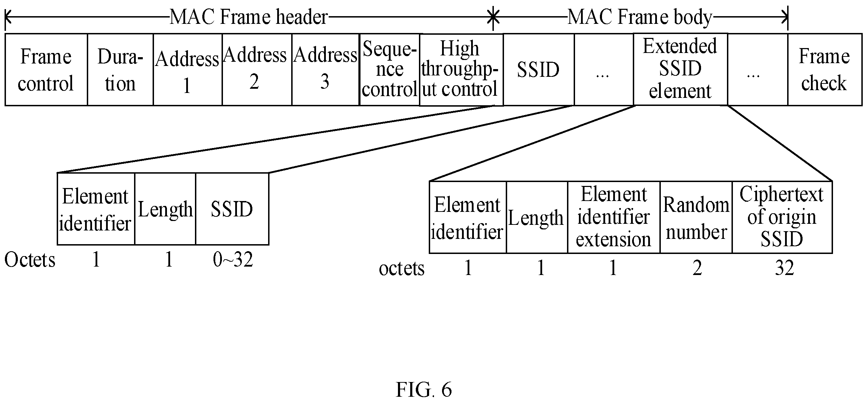

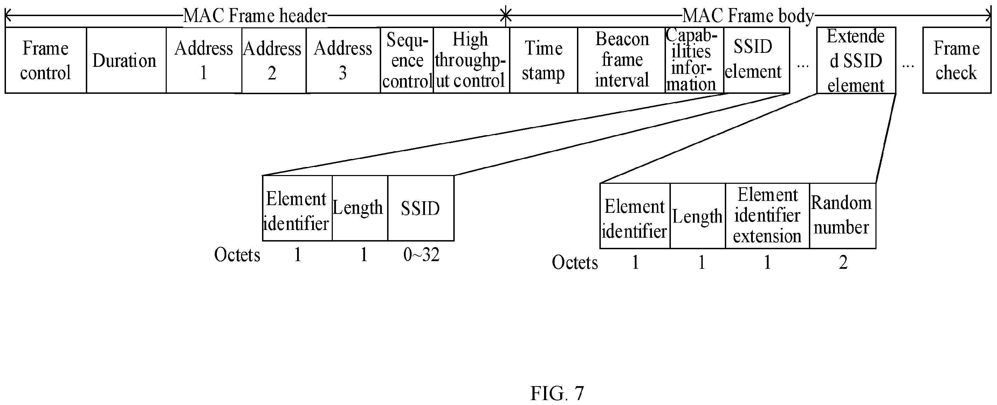

In some implementations, regardless of whether the changed SSID is derived from the original SSID, the station supporting the random SSID feature may use the desired SSID probe request, indicating the capability information and the changed SSID in the probe request frame and carrying the random number R2 and the ciphertext of the original SSID in the extended SSID element, as shown in FIG. 6. After receiving the probe request frame, the access point can associate the capability information, the changed SSID, the random number R2 and the ciphertext of the original SSID with its own stored SSID_0, thereby determining that the station is probing the access point. The access point then responds with a probe response frame carrying the capability information of the access point, the random number R2, and the SSID_1, as shown in FIG. 7. After receiving the frame, the station can associate the SSID_1 with the stored SSID_0 according to the random number R2, thereby determining that the access point is the access point that needs to be connected. The ciphertext of the original SSID may be generated by symmetric encryption of the original SSID using the key of the network and the random number R2 (for example, using the AES algorithm), or may be generated using the hash algorithm (for example, the SHA algorithm), or may be generated using the key derivation algorithm (for example, the HKDF or PBKDF).

In the embodiment 2, as an example 2, in a case where the access point is set as a hidden network, the beacon frame of the access point carries the access point capability information but does not carry the SSID information. In a case where the station transmits the desired SSID probe request (carrying the SSID_1), the access point responds with the probe response frame carrying the access point capability information and the SSID_1. In a case where the station transmits the desired SSID probe request (carrying the SSID_0), the access point does not respond. That is, in this mode, stations that do not support the random SSID feature can only connect to the access point as a new network (identified by the SSID_1) and cannot connect to it as a network identified by the SSID_0.

Thus, regardless of whether the changed SSID is derived from the original SSID, the station supporting the random SSID can only use the desired SSID probe request, carrying the capability information in the probe request frame and carrying the random number R2 and the ciphertext of the original SSID in the extended SSID element, as shown in FIG. 6. After receiving the probe request frame, the access point may associate the capability information, the random number R2 and the ciphertext of the original SSID with the its own stored SSID_0, thereby determining that the station is probing the access point. The access point responds with the probe response frame carrying the access point capability information, the random number R2 and SSID_1, as shown in FIG. 7. After receiving the probe response frame, the station can associate SSID_1 with the stored SSID_0 according to the random number R2, thereby determining that the access point is an access point that needs to be connected. The ciphertext of the original SSID may be generated by the symmetric encryption of the original SSID using the key of the network and the random number R2 (for example, using the AES algorithm), or may be generated using the hash algorithm (for example, the SHA algorithm), or may be generated using the key derivation algorithm (for example, HKDF or PBKDF).

In embodiment 3, the STA uses the second set of target features to perform the signaling interaction with the AP; where the second set of target features is part or all of the set of privacy enhancement features supported by the AP, where the set of privacy enhancement features includes the set of client privacy enhancement features and/or the set of basic service set privacy enhancement features. Further, the AP allows an access of a STA that supports fewer set of basic service set privacy enhancement features than the set of basic service set privacy enhancement features supported by the AP.

In some implementations, in a case where the STA supports at least the first subset of features and the AP supports at least the first subset of features, the second set of target features is an intersection of the set of privacy enhancement features supported by the STA and the set of privacy enhancement features supported by the AP, and the set of privacy enhancement features includes the set of client privacy enhancement features and/or the set of basic service set privacy enhancement features.

In some implementations, in a case where the STA supports the first subset of features and the third subset of features, and the AP supports the first subset of features and the third subset of features, the second set of target features is the first subset of features and the third subset of features.

In some implementations, in a case where the STA supports the first subset of features and the third subset of features, and the AP supports the first subset of features, the second subset of features and the third subset of features, the second set of target features is the first subset of features and the third subset of features.

In some implementations, in a case where the STA supports the first subset of features and the third subset of features, and the AP supports the first subset of features, the second subset of features, the third subset of features and the fourth subset of features, the second set of target features is the first subset of features and the third subset of features.

In some implementations, in a case where the STA supports the first subset of features and the third subset of features, and the AP supports the first subset of features, the second subset of features, the third subset of features, the fourth subset of features and the fifth subset of features, the second set of target features is the first subset of features and the third subset of features.

In some implementations, in a case where the STA supports the first subset of features, the second subset of features and the third subset of features, and the AP supports the first subset of features and the third subset of features, the second set of target features is the first subset of features and the third subset of features.

In some implementations, in a case where the STA supports the first subset of features, the second subset of features and the third subset of features, and the AP supports the first subset of features, the second subset of features and the third subset of features, the second set of target features is the first subset of features, the second subset of features and the third subset of features.

In some implementations, in a case where the STA supports the first subset of features, the second subset of features and the third subset of features, and the AP supports the first subset of features, the second subset of features, the third subset of features and the fourth subset of features, the second set of target features is the first subset of features, the second subset of features and the third subset of features.

In some implementations, in a case where the STA supports the first subset of features, the second subset of features and the third subset of features, and the AP supports the first subset of features, the second subset of features, the third subset of features, the fourth subset of features and the fifth subset of features, the second set of target features is the first subset of features, the second subset of features and the third subset of features.

In some implementations, in a case where the STA supports the first subset of features, the second subset of features, the third subset of features and the fourth subset of features, and the AP supports the first subset of features and the third subset of features, the second set of target features is the first subset of features and the third subset of features.

In some implementations, in a case where the STA supports the first subset of features, the second subset of features, the third subset of features and the fourth subset of features, and the AP supports the first subset of features, the second subset of features and the third subset of features, the second set of target features is the first subset of features, the second subset of features and the third subset of features.

In some implementations, in a case where the STA supports the first subset of features, the second subset of features, the third subset of features and the fourth subset of features, and the AP supports the first subset of features, the second subset of features, the third subset of features and the fourth subset of features, the second set of target features is the first subset of features, the second subset of features, the third subset of features and the fourth subset of features.

In some implementations, in a case where the STA supports the first subset of features, the second subset of features, the third subset of features and the fourth subset of features, and the AP supports the first subset of features, the second subset of features, the third subset of features, the fourth subset of features and the fifth subset of features, the second set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features and the third subset of features, the second set of target features is the first subset of features and the third subset of features.

In some implementations, in a case where the STA supports the first subset of features, the second subset of features, the third subset of features, the fourth subset of features and the fifth subset of features, and the AP supports the first subset of features, the second subset of features and the third subset of features, the second set of target features is the first subset of features, the second subset of features and the third subset of features.

In some implementations, in a case where the STA supports the first subset of features, the second subset of features, the third subset of features, the fourth subset of features and the fifth subset of features, and the AP supports the first subset of features, the second subset of features, the third subset of features and the fourth subset of features, the second set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the second set of target features is the first subset of features, the second subset of features, the third subset of features, the fourth subset of features and the fifth subset of features.

In some implementations, in a case where the STA does not support the first subset of features, the STA does not use the privacy enhancement feature in a case of accessing the AP.

In some implementations, in a case where the STA supports the first subset of features, and the AP supports the first subset of features and the third subset of features, the STA does not use the privacy enhancement feature in a case of accessing the AP.

In some implementations, in a case where the STA supports the first subset of features, and the AP supports the first subset of features, the second subset of features and the third subset of features, the STA does not use the privacy enhancement feature in a case of accessing the AP.

In some implementations, in a case where the STA supports the first subset of features, and the AP supports the first subset of features, the second subset of features, the third subset of features and the fourth subset of features, the STA does not use the privacy enhancement feature in a case of accessing the AP.

In some implementations, in a case where the STA supports the first subset of features, and the AP supports the first subset of features, the second subset of features, the third subset of features, the fourth subset of features and the fifth subset of features, the STA does not use the privacy enhancement feature in a case of accessing the AP.

In some implementations of the embodiment 3, the subset of features supported by the AP and the subset of features supported by the STA may be as shown in Table 5, and under different subset of features, the subset of features used by the STA when performing the signaling interaction with the AP may be as shown in Table 5. In Table 5, CPE1 represents the first subset of features, CPE2 represents the second subset of features, BPE1 represents the third subset of features, BPE2 represents the fourth subset of features, and BPE3 represents the fifth subset of features.

**Table 5**

| | | Subset of features supported by the AP | | | |
|---|---|---|---|---|---|
| | | CPE1 + BPE1 | CPE1 + BPE1 + CPE2 | CPE1 + BPE1 + CPE2 + BPE2 | CPE1 + BPE1 + CPE2+ BPE2 + BPE3 |
| Subset of features supported by STA | Not supporting CPE1 | Not using privacy enhancement feature | Not using privacy enhancement feature | Not using privacy enhancement feature | Not using privacy enhancement feature |
| | CPE1 | Not using privacy enhancement feature | Not using privacy enhancement feature | Not using privacy enhancement feature | Not using privacy enhancement feature |
| | CPE1 + BPE1 | Using CPE1 + BPE1 | Using CPE1 + BPE1 | Using CPE1 + BPE1 | Using CPE1 + BPE1 |
| | CPE1 + BPE1 + CPE2 | Using CPE1 + BPE1 | Using CPE1 + BPE1 + CPE2 | Using CPE1 + BPE1 + CPE2 | Using CPE1 + BPE1 + CPE2 |
| | CPE1 + BPE1 + CPE2 + BPE2 | Using CPE1 + BPE1 | Using CPE1 + BPE1 + CPE2 | Using CPE1 + BPE1 + CPE2 + BPE2 | Using CPE1 + BPE1 + CPE2 + BPE2 |
| | CPE1 + BPE1 + CPE2 + BPE2 + BPE3 | Using CPE1 + BPE1 | Using CPE1 + BPE1 + CPE2 | Using CPE1 + BPE1 + CPE2 + BPE2 | Using CPE1 + BPE1 + CPE2 + BPE2 + BPE3 |

Specifically, in the above Table 5, in a case where the STA does not support the CPE1, and the AP supports the CPE1 and BPE1, the STA does not use the privacy enhancement feature in a case of accessing the AP.

Specifically, in the above Table 5, in a case where the STA does not support the CPE1, and the AP supports the CPE1, CPE2, and BPE1, the STA does not use the privacy enhancement feature in a case of accessing the AP.

Specifically, in the above Table 5, in a case where the STA does not support the CPE1, and the AP supports the CPE1, CPE2, BPE1 and BPE2, the STA does not use the privacy enhancement feature in a case of accessing the AP.

Specifically, in the above Table 5, in a case where the STA does not support the CPE1, and the AP supports the CPE1, CPE2, BPE1, BPE2 and BPE3, the STA does not use the privacy enhancement feature in a case of accessing the AP.

Specifically, in the above Table 5, in a case where the STA supports the CPE1, and the AP supports the CPE1 and BPE1, the STA does not use the privacy enhancement feature in a case of accessing the AP.

Specifically, in the above Table 5, in a case where the STA supports the CPE1, and the AP supports the CPE1, CPE2 and BPE1, the STA does not use the privacy enhancement feature in a case of accessing the AP.

Specifically, in the above Table 5, in a case where the STA supports the CPE1, and the AP supports the CPE1, CPE2, BPE1 and BPE2, the STA does not use the privacy enhancement feature in a case of accessing the AP.

Specifically, in the above Table 5, in a case where the STA supports the CPE1, and the AP supports the CPE1, CPE2, BPE1, BPE2 and BPE3, the STA does not use the privacy enhancement feature in a case of accessing the AP.

Specifically, in the above Table 5, in a case where the STA supports the CPE1 and BPE1, and the AP supports the CPE1 and BPE1, the second set of target features is the CPE1 and BPE1, that is, the STA uses the CPE1 and BPE1 to perform the signaling interaction with the AP.

Specifically, in the above Table 5, in a case where the STA supports the CPE1 and BPE1, and the AP supports the CPE1, CPE2 and BPE1, the second set of target features is the CPE1 and BPE1, that is, the STA uses the CPE1 and BPE1 to perform the signaling interaction with the AP.

Specifically, in the above Table 5, in a case where the STA supports the CPE1 and BPE1, and the AP supports the CPE1, CPE2, BPE1 and BPE2, the second set of target features is the CPE1 and BPE1, that is, the STA uses the CPE1 and BPE1 to perform the signaling interaction with the AP.

Specifically, in the above Table 5, in a case where the STA supports the CPE1 and BPE1, and AP supports the CPE1, CPE2, BPE1, BPE2 and BPE3, the second set of target features is the CPE1 and BPE1, that is, STA uses the CPE1 and BPE1 to perform the signaling interaction with the AP.

Specifically, in the above Table 5, in a case where the STA supports the CPE1, CPE2 and BPE1, and the AP supports the CPE1 and BPE1, the second set of target features is the CPE1 and BPE1, that is, the STA uses the CPE1 and BPE1 to perform the signaling interaction with the AP.

Specifically, in the above Table 5, in a case where the STA supports the CPE1, CPE2 and BPE1, and AP supports the CPE1, CPE2 and BPE1, the second set of target features is the CPE1, CPE2 and BPE1, that is, STA uses the CPE1, CPE2 and BPE1 to perform the signaling interaction with the AP.

Specifically, in the above Table 5, in a case where the STA supports the CPE1, CPE2 and BPE1, and AP supports the CPE1, CPE2, BPE1 and BPE2, the second set of target features is the CPE1, CPE2 and BPE1, that is, STA uses the CPE1, CPE2 and BPE1 to perform the signaling interaction with the AP.

Specifically, in the above Table 5, in a case where the STA supports the CPE1, CPE2 and BPE1, and the AP supports the CPE1, CPE2, BPE1, BPE2 and BPE3, the second set of target features is the CPE1, CPE2 and BPE1, that is, the STA uses the CPE1, CPE2 and BPE1 to perform the signaling interaction with the AP.

Specifically, in the above Table 5, in a case where the STA supports the CPE1, CPE2, BPE1 and BPE2, and the AP supports the CPE1 and BPE1, the second set of target features is the CPE1 and BPE1, that is, the STA uses the CPE1 and BPE1 to perform the signaling interaction with the AP.

Specifically, in the above Table 5, in a case where the STA supports the CPE1, CPE2, BPE1 and BPE2, and the AP supports the CPE1, CPE2 and BPE1, the second set of target features is the CPE1, CPE2 and BPE1, that is, the STA uses the CPE1, CPE2 and BPE1 to perform the signaling interaction with the AP.

Specifically, in the above Table 5, in a case where the STA supports the CPE1, CPE2, BPE1 and BPE2, and the AP supports the CPE1, CPE2, BPE1 and BPE2, the second set of target features is the CPE1, CPE2, BPE1 and BPE2, that is, the STA uses the CPE1, CPE2, BPE1 and BPE2 to perform the signaling interaction with the AP.

Specifically, in the above Table 5, in a case where the STA supports the CPE1, CPE2, BPE1 and BPE2, and the AP supports the CPE1, CPE2, BPE1, BPE2 and BPE3, the second set of target features is the CPE1, CPE2, BPE1 and BPE2, that is, the STA uses the CPE1, CPE2, BPE1 and BPE2 to perform the signaling interaction with the AP.

Specifically, in the above Table 5, in a case where the STA supports the CPE1, CPE2, BPE1, BPE2 and BPE3, and the AP supports the CPE1 and BPE1, the second set of target features is the CPE1 and BPE1, that is, the STA uses the CPE1 and BPE1 to perform the signaling interaction with the AP.

Specifically, in the above Table 5, in a case where the STA supports the CPE1, CPE2, BPE1, BPE2 and BPE3, and the AP supports the CPE1, CPE2 and BPE1, the second set of target features is the CPE1, CPE2 and BPE1, that is, the STA uses the CPE1, CPE2 and BPE1 to perform the signaling interaction with the AP.

Specifically, in the above Table 5, in a case where the STA supports the CPE1, CPE2, BPE1, BPE2 and BPE3, and the AP supports the CPE1, CPE2, BPE1 and BPE2, the second set of target features is the CPE1, CPE2, BPE1 and BPE2, that is, the STA uses the CPE1, CPE2, BPE1 and BPE2 to perform the signaling interaction with the AP.

Specifically, in the above Table 5, in a case where the STA supports the CPE1, CPE2, BPE1, BPE2 and BPE3, and the AP supports the CPE1, CPE2, BPE1, BPE2 and BPE3, the second set of target features is the CPE1, CPE2, BPE1, BPE2 and BPE3, that is, STA uses the CPE1, CPE2, BPE1, BPE2 and BPE3 to perform the signaling interaction with the AP.

In some implementations of the embodiment 3, the basic service set enhanced privacy access point simultaneously enables the random SSID feature and the feature of compatible with the station that do not support the random SSID. In a case where the access point (such as a vehicle-mounted access point and/or a mobile hotspot turned on by a mobile phone) is configured by a user to enable the station privacy enhancement feature, the basic service set privacy enhancement feature and the random SSID feature, in the access point whether to support the CPE feature is set to yes, whether to support the BPE feature is set to yes, the random SSID feature is set to yes, and partial BPE supported is set to yes. That is, the capability information of the access point is: whether to support the CPE feature being set to yes, whether to support the BPE feature being set to yes, the random SSID feature being set to yes, and partial BPE supported being set to yes.

In Embodiment 3, as Example 1, in a case where the access point is set as the non-hidden network, the beacon frame of the access point carries the capability information of the access point and the changed SSID (denoted as SSID_1, and an original SSID is denoted as SSID_0). In a case where the station transmits a desired SSID probe request (carrying SSID_1) or transmits a wildcard SSID probe request, the access point responds with a probe response frame carrying the access point capability information and the SSID_1. In a case where the station transmits a desired SSID probe request (carrying SSID_0), the access point responds with a probe response frame carrying the capability information of the access point and the SSID_0. That is to say, in this mode, the network established by the access point has two identifiers (the SSID_1 and SSID_0). Stations that do not support the random SSID feature can only connect to it as two different networks. Furthermore, in order to prevent downgrade attacks, stations that support the random SSIDs can only connect to the network represented by the SSID_1. The active or passive scanning manner of the station supporting the random SSID feature is as described in the example 1 of the above embodiment 2, which will not be repeated here.

In the embodiment 3, as an example 2, in a case where the access point is set as a hidden network, the beacon frame of the access point carries the access point capability information but does not carry the SSID information. In a case where the station transmits the desired SSID probe request (carrying the SSID_1), the access point responds with the probe response frame carrying the access point capability information and the SSID_1. In a case where the station transmits the desired SSID probe request (carrying the SSID_0), the access point responds with the probe response frame carrying the capability information of the access point and the SSID_0. That is to say, in this mode, the network established by the access point has two identifiers (the SSID_1 and SSID_0). Stations that do not support random SSIDs can only connect to it as two different networks. Furthermore, in order to prevent downgrade attacks, stations that support random SSIDs can only connect to the network represented by SSID_1. The active or passive scanning manner of the station supporting the basic service set privacy enhancement feature is as described in the example 2 in the above embodiment 2, which will not be repeated here.

It is worth noting that, in the embodiment 3, some SSIDs in the probe request frames and probe response frames may still be used to track access points. However, as stations that do not support the random SSID feature are gradually delisted, the privacy leakage risk they bring will gradually decrease. In addition, because it is compatible with stations that do not support the random SSID feature, this option can take into account market benefits, is conducive to promoting the application with privacy protection features, and promotes the delisting of stations that do not support random SSID.

In the above embodiment 2 and embodiment 3, it is clarified how the access point and the station interact with each other in a case of supporting the client privacy enhancement feature and the basic service set privacy enhancement feature, for example, how the privacy-enhanced access point is compatible with the station that does not support the basic service set privacy enhancement feature in a case of changing the SSID. This solution can effectively solve the problem of protecting user privacy in a case where stations and access points interact.

Therefore, in the embodiments of the present application, the set of basic service set privacy enhancement features maintained by the STA includes the first subset of features and/or the second subset of features, and the set of basic service set privacy enhancement features maintained by the STA includes at least one of the third subset of features, the fourth subset of features or the fifth subset of features. By reasonably dividing into different subsets of features, different feature selections may be supported.

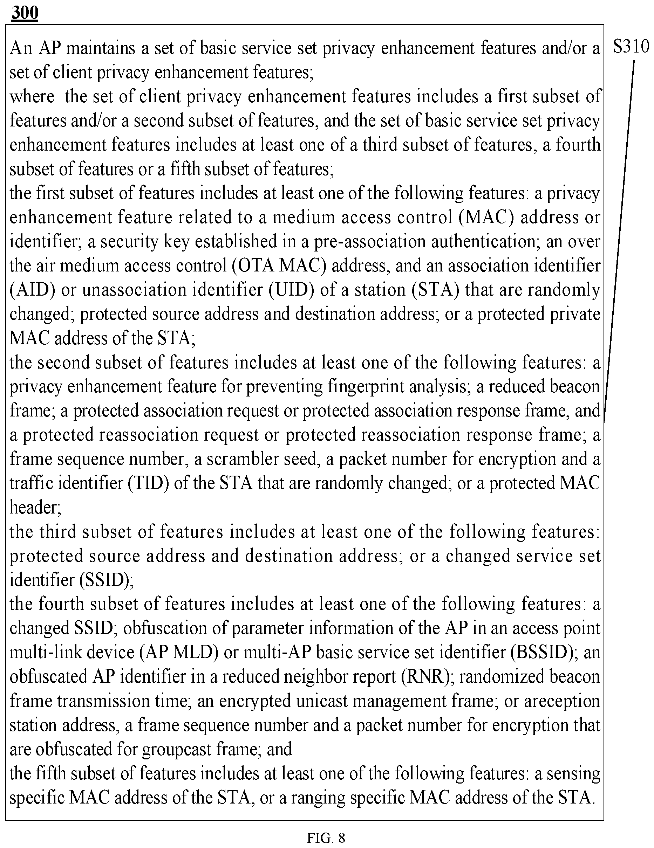

The STA side embodiments of the present application are described in detail above in combination with FIGS. 2 to 7. AP side embodiments of the present application will be described in detail below in combination with FIG. 8. It should be understood that the AP side embodiments and the STA side embodiments correspond to each other, and similar descriptions may refer to the STA side embodiments.

FIG. 8 is a schematic flowchart of a wireless communication method 300 according to an embodiment of the present application. As shown in FIG. 8, the wireless communication method 300 may include at least part of the following contents.

In S310, an AP maintains a set of basic service set privacy enhancement features and/or a set of client privacy enhancement features; the set of client privacy enhancement features includes a first subset of features and/or a second subset of features, and the set of basic service set privacy enhancement features includes at least one of a third subset of features, a fourth subset of features or a fifth subset of features. The first subset of features includes at least one of the following features: a privacy enhancement feature related to an MAC address or identifier; a security key established in a pre-association authentication; an OTA MAC address, and AID or UID of a station (STA) that are randomly changed; protected source address and destination address; or a protected private MAC address of the STA. The second subset of features includes at least one of the following features: a privacy enhancement feature for preventing fingerprint analysis; a reduced beacon frame; a protected association request frame or protected association response frame, and a protected reassociation request frame or protected reassociation response frame; a frame sequence number, a scrambler seed, a packet number for encryption and TID of a STA that are randomly changed; or a protected MAC header. The third subset of features includes at least one of the following features: protected source address and destination address; or a changed SSID. The fourth subset of features includes at least one of the following features: a changed SSID; obfuscation of parameter information of an AP in an AP MLD or a multi-AP BSSID; an obfuscated AP identifier in an RNR; randomized beacon frame transmission time; an encrypted unicast management frame; or a reception station address, a frame sequence number and a packet number for encryption that are obfuscated for groupcast frame. The fifth subset of features includes at least one of the following features: a sensing specific MAC address of the STA, or a ranging specific MAC address of the STA.

In the embodiments of the present application, the set of basic service set privacy enhancement features maintained by the AP includes the first subset of features and/or the second subset of features, and the set of basic service set privacy enhancement features maintained by the AP includes at least one of the third subset of features, the fourth subset of features or the fifth subset of features. By reasonably dividing into different subsets of features, different feature selections may be supported.

In some embodiments, the set of basic service set privacy enhancement features may be an optional set of privacy enhancement features maintained by the AP. That is, in the embodiments of the present application, the AP maintains the set of client privacy enhancement features, or the AP maintains the set of basic service set privacy enhancement features and the set of client privacy enhancement features.

In the embodiments of the present application, a "field" may also be referred to as a "domain" or a "subfield". One field may occupy one or more bytes/octets, or one field may occupy one or more bits.

The AP may be, for example, a mobile phone hotspot or a vehicle-mounted access point.

In the embodiments of the present application, the "set of client privacy enhancement features" may also be referred to as the "set of station-related privacy enhancement features", which is not limited in the present application.

In some embodiments, the STA and the AP locally maintain the MIB variables, and the MIB variables contain the set of basic service set privacy enhancement features and/or the set of client privacy enhancement features. Specifically, a value of the MIB variable is set by an upper layer application within the device or by a user. For example, for the STA, the value of the MIB variable is set by an upper layer application within the STA or by the user. For another example, for the AP, the value of the MIB variable is set by an upper layer application within the AP or by the user.

In some embodiments, in the set of client privacy enhancement features, the first subset of features is a subset of features that is mandatorily supported by the AP, and/or the second subset of features is a subset of features that is optionally supported by the AP, or the second subset of features is a subset of features that is mandatorily supported by the AP. For example, in the set of client privacy enhancement features, subsets of features may be divided according to relevance between features.

In some embodiments, in the set of client privacy enhancement features, the first subset of features is a mandatory subset of features that the STA supports, and/or the second subset of features is a subset of features that is optionally supported by the STA. For example, in the set of client privacy enhancement features, subsets of features may be divided according to relevance between features.

Optionally, dot11CPEImplemented indicates whether a mandatory set of station-related privacy enhancement features (i.e., the first subset of features) is implemented.

Specifically, in the set of client privacy enhancement features, the first subset of features is a mandatory subset of features (denoted as CPE1) for the STA and is indicated by the dot11CPEImplemented, including but not limited to at least one of: a privacy enhancement feature related to an MAC address or identifier (such as authentication identify (SAE password ID) and pairwise master key identify (PMK ID)), a security key established in a pre-association authentication, an OTA MAC address and an AID/UID of the station that are randomly changed, protected source station address (SA) and destination station address (DA) values, or a protected private MAC address of the station.

Specifically, in the set of client privacy enhancement features, the second subset of features is a mandatory subset of features (denoted as CPE2) for the STA, including but not limited to at least one of: the privacy enhancement feature for preventing fingerprint analysis (such as the reduced probe request frame/reduced probe response frame), the reduced beacon frame, the protected association request frame/protected association response frame and the protected reassociation request frame/protected reassociation response frame, the frame sequence number (SN), scrambler seed, packet number (PN) for encryption and traffic identifier (TID) of the STA that are randomly changed, or the protected MAC header.

Optionally, dot11CPEReducedScanningImplemented indicates whether the reduced probe request frame/reduced probe response frame and the reduced beacon frame are implemented.

Optionally, dot11CPEProtectedAssociationImplemented indicates whether the protected association request frame/protected association response frame and the protected reassociation request frame/protected reassociation response frame are implemented.

Optionally, dot11CPERandomNumbersImplemented indicates whether the frame sequence number (SN), scrambler seed, packet number (PN) for encryption and traffic identifier (TID) of the station that are randomly changed is implemented.

Optionally, dot11CPEMACHeaderProtectionImplemented indicates whether the protected MAC header is implemented.

In some embodiments, in the set of basic service set privacy enhancement features, the third subset of features is a subset of features that is mandatorily supported by a mobile AP, and/or the fourth subset of features is a subset of features that is optionally supported by the AP, and/or the fifth subset of features is a subset of features that is optionally supported by the AP. For example, in the set of basic service set privacy enhancement features, the subsets of features may be divided according to relevance between various features.

In some embodiments, in a case where the AP is a mobile AP (e.g., a mobile phone hotspot or a vehicle-mounted access point), the AP supports at least the third subset of features.

In some embodiments, in the set of basic service set privacy enhancement features, the third subset of features is an optional subset of features that STA supports, and/or the fourth subset of features is an optional subset of features that STA supports, and/or the fifth subset of features is an optional subset of features that STA supports. For example, in the set of basic service set privacy enhancement features, the subsets of features may be divided according to relevance between various features.

Optionally, dot11BPEImplemented indicates whether the conditionally mandatory set of privacy enhancement features related to the basic service set is implemented.

Optionally, dot11PattialBPESupportActivated indicates whether the access point supports an access of stations that implement partial privacy enhancement features.

Specifically, in the set of basic service set privacy enhancement features, the third subset of features is an optional subset of features (denoted as BPE1) for the STA, indicated by the dot11BPEImplemented, including but not limited to at least one of: protected source address (SA) and destination address (DA) values; or changed basic service set identifier (BSSID).

Specifically, in the set of basic service set privacy enhancement features, the fourth subset of features is an optional subset of features (denoted as BPE2) for the STA, including but not limited to at least one of: the changed SSID, the obfuscation of parameter information of the access point in the access point multi-link device (AP MLD) or the multiple-AP BSSID, the obfuscated access point identifier in the reduced neighbor reports (RNR), the randomized beacon frame transmission time, the encrypted unicast management frame, the reception station address, frame sequence number and packet number for encryption that are obfuscated for groupcast frame.

Optionally, dot11BPERandomSSIDImplemented indicates whether the changed SSID is implemented.

Optionally, dot11BPEAPIdentityEnhancementImplemented indicates whether the obfuscation of parameter information of the access point in the access point multi-link device (AP MLD) or the multiple-AP BSSID and the obfuscated access point identifier in the reduced neighbor report (RNR) are implemented.

Optionally, dot11BPEUnicastPMFImplemented indicates whether the encrypted unicast management frame is implemented.

Optionally, dot11BPERandomizedBeaconTransmissionImplemented indicates whether the randomized beacon frame transmission time is implemented.

Optionally, dot11BPEGroupcastPrivacyEnhancementImplemented indicates whether the reception station address, frame sequence number and packet number for encryption that are obfuscated for groupcast frame are implemented.

Specifically, in the set of basic service set privacy enhancement features, the fifth subset of features is an optional subset of features (denoted as BPE3) for the STA, including but not limited to at least one of: the sensing specific MAC address of the station, or the ranging specific MAC address of the station.

Optionally, dot11BPEServiceSpecificMACImplemented indicates whether the sensing specific MAC address of the station and the ranging specific MAC address of the station are implemented.

In some embodiments, the support of the above subset of features by the privacy-enhanced AP and the privacy-enhanced STA is shown in Table 1 above.

In some embodiments, the STA and the AP may communicate the basic service set privacy enhancement feature and/or the client privacy enhancement feature that they support respectively.

In some embodiments, the AP receives a second frame;
where the second frame includes a second element, and the second element is used to indicate capability information related to the privacy enhancement feature of the STA.

For example, the AP transmits the second frame to the STA.

In some embodiments, the second element includes but is not limited to at least one of: a client privacy enhancement features supported field, a basic service set privacy enhancement features supported field, a partial basic service set privacy enhancement features supported field, a reduced scanning field, a protected association frame field, a random numbers field, an MAC header protection field, a random SSID field, an AP identifier privacy enhancement field, a unicast management frame encryption field, a randomized beacon frame transmission time field, a groupcast frame privacy enhancement field, or a service specific MAC address field.

Specifically, the client privacy enhancement (CPE) features supported field is used to indicate whether the STA supports a mandatory set of privacy enhancement features related to the STA. For example, the client privacy enhancement features supported field occupies 1 bit (of course, it may also occupy more bits). A value of 1 indicates that the STA supports the mandatory set of privacy enhancement features related to the STA, and a value of 0 indicates that the STA does not support the mandatory set of privacy enhancement features related to the STA; or, the value of 0 indicates that the STA supports the mandatory set of privacy enhancement features related to the STA, and the value of 1 indicates that the STA does not support the mandatory set of privacy enhancement features related to the STA. It should be noted that, in a case of implementing the same feature, the client privacy enhancement (CPE) features supported field may also be replaced with other names, which is not limited in the embodiments of the present application.

Specifically, the basic service set privacy enhancement (BPE) features supported field is used to indicate whether the STA supports a mandatory set of privacy enhancement features related to the basic service set. For example, the basic service set privacy enhancement features supported field occupies 1 bit (of course, it may also occupy more bits). A value of 1 indicates that the STA supports the mandatory set of privacy enhancement features related to the basic service set, and a value of 0 indicates that the STA does not support the mandatory set of privacy enhancement features related to the basic service set; or, the value of 0 indicates that the STA supports the mandatory set of privacy enhancement features related to the basic service set, and a value of 1 indicates that the STA does not support the mandatory set of privacy enhancement features related to the basic service set. It should be noted that, in a case of implementing the same feature, the basic service set privacy enhancement (BPE) features supported field may also be replaced with other names, which is not limited in the embodiments of the present application.

Specifically, the partial basic service set privacy enhancement (BPE) feature supported field is used to indicate whether the STA supports an access of a STA that implements partial privacy enhancement features. For example, the partial basic service set privacy enhancement features supported field occupies 1 bit (of course, it may also occupy more bits). A value of 1 indicates that the STA supports an access of STA that implements the partial privacy enhancement features, and a value of 0 indicates that the STA does not support the access of STA that implements the partial privacy enhancement features; or the value of 0 indicates that the STA supports the access of STA that implements the partial privacy enhancement features, and the value of 1 indicates that the STA does not support the access of STA that implements the partial privacy enhancement features. It should be noted that, in a case of implementing the same feature, the partial basic service set privacy enhancement (BPE) feature field may also be replaced with other names, which is not limited in the embodiments of the present application.

Specifically, the reduced scanning field is used to indicate whether the STA supports the reduced probe request frame or the reduced probe response frame and the reduced beacon frame. For example, the reduced scanning field occupies 1 bit (of course, it may also occupy more bits). A value of 1 indicates that the STA supports the reduced probe request or reduced probe response frame and the reduced beacon frame, and a value of 0 indicates that the STA does not support the reduced probe request or reduced probe response frame and the reduced beacon frame; or, the value of 0 indicates that the STA supports the reduced probe request or reduced probe response frame and the reduced beacon frame, and the value of 1 indicates that the STA does not support the reduced probe request or reduced probe response frame and the reduced beacon frame. It should be noted that, in a case of implementing the same feature, the reduced scanning field may also be replaced with other names, which is not limited in the embodiments of the present application.

Specifically, the protected association frame field is used to indicate whether the STA supports the protected association request frame or protected association response frame and the protected reassociation request frame or protected reassociation response frame. For example, the protected association frame field occupies 1 bit (of course, it may also occupy more bits). A value of 1 indicates that the STA supports the protected association request frame or protected association response frame and the protected reassociation request frame or protected reassociation response frame, and a value of 0 indicates that the STA does not support the protected association request frame or protected association response frame and the protected reassociation request frame or protected reassociation response frame; or, the value of 0 indicates that the STA supports the protected association request frame or protected association response frame and the protected reassociation request frame or protected reassociation response frame, and the value of 1 indicates that the STA does not support the protected association request frame or protected association response frame and the protected reassociation request frame or protected reassociation response frame. It should be noted that, in a case of implementing the same feature, the protected association frame field may also be replaced with other names, which is not limited in the embodiments of the present application.

Specifically, the random numbers field is used to indicate whether the STA supports the frame sequence number, scrambler seed, packet number for encryption and TID of the STA that are randomly changed. For example, the random numbers field occupies 1 bit (of course, it may also occupy more bits). A value of 1 indicates that the STA supports the frame sequence number, scrambler seed, packet number for encryption and TID of the STA that are randomly changed, and a value of 0 indicates that the STA does not support the frame sequence number, scrambler seed, packet number for encryption and TID of the STA that are randomly changed; or, the value of 0 indicates that the STA supports the frame sequence number, scrambler seed, packet number for encryption and TID of the STA that are randomly changed, and the value of 1 indicates that the STA does not support the frame sequence number, scrambler seed, packet number for encryption and TID of the STA that are randomly changed. It should be noted that, in a case of implementing the same feature, the random numbers field may also be replaced with other names, which is not limited in the embodiments of the present application.

Specifically, the MAC header protection field is used to indicate whether the STA supports the protected MAC header. For example, the MAC header protection field occupies 1 bit (of course, it may also occupy more bits). A value of 1 indicates that the STA supports the protected MAC header, and a value of 0 indicates that the STA does not support the protected MAC header; or, the value of 0 indicates that the STA supports the protected MAC header, and the value of 1 indicates that the STA does not support the protected MAC header. It should be noted that, in a case of implementing the same feature, the MAC header protection field may also be replaced with other names, which is not limited in the embodiments of the present application.

Specifically, the random SSID field is used to indicate whether the STA supports the changed SSID. For example, the random SSID field occupies 1 bit (of course, it may also occupy more bits). A value of 1 indicates that the STA supports the changed SSID, and a value of 0 indicates that the STA does not support the changed SSID; or, the value of 0 indicates that the STA supports the changed SSID, and a value of 1 indicates that the STA does not support the changed SSID. It should be noted that, in a case of implementing the same feature, the random SSID field may also be replaced with other names, which is not limited in the embodiments of the present application.

Specifically, the AP identity privacy enhancement field is used to indicate whether the STA supports the obfuscation of parameter information of the AP in the AP MLD or multi-AP BSSID and the obfuscated AP identifier in the RNR. For example, the AP identity privacy enhancement field occupies 1 bit (of course, it may also occupy more bits). A value of 1 indicates that the STA supports the obfuscation of parameter information of the AP in the AP MLD or multi-AP BSSID and the obfuscated AP identifier in the RNR, and a value of 0 indicates that the STA does not support the obfuscation of parameter information of the AP in the AP MLD or multi-AP BSSID and the obfuscated AP identifier in the RNR; or, the value of 0 indicates that the STA supports the obfuscation of parameter information of the AP in the AP MLD or multi-AP BSSID and the obfuscated AP identifier in the RNR, and the value of 1 indicates that the STA does not support the obfuscation of parameter information of the AP in the AP MLD or multi-AP BSSID and the obfuscated AP identifier in the RNR. It should be noted that, in a case of implementing the same feature, the AP identity privacy enhancement field may also be replaced with other names, which is not limited in the embodiments of the present application.

Specifically, the unicast management frame encryption field is used to indicate whether the STA supports the encrypted unicast management frame. For example, the unicast management frame encryption field occupies 1 bit (of course, it may also occupy more bits). A value of 1 indicates that the STA supports the encrypted unicast management frame, and a value of 0 indicates that the STA does not support the encrypted unicast management frame; or, a value of 0 indicates that the STA supports the encrypted unicast management frame, and a value of 1 indicates that the STA does not support the encrypted unicast management frame. It should be noted that, in a case of implementing the same feature, the unicast management frame encryption field may also be replaced with other names, which is not limited in the embodiments of the present application.

Specifically, the randomized beacon frame transmission time field is used to indicate whether the STA supports the randomized beacon frame transmission time. For example, the randomized beacon frame transmission time field occupies 1 bit (of course, it may also occupy more bits). A value of 1 indicates that the STA supports the randomized beacon frame transmission time, and a value of 0 indicates that the STA does not support the randomized beacon frame transmission time; or, the value of 0 indicates that the STA supports the randomized beacon frame transmission time, and the value of 1 indicates that the STA does not support the randomized beacon frame transmission time. It should be noted that, in a case of implementing the same feature, the randomized beacon frame transmission time field may also be replaced with other names, which is not limited in the embodiments of the present application.

Specifically, the groupcast frame privacy enhancement field is used to indicate whether the STA supports the reception station address, frame sequence number and packet number for encryption that are obfuscated for groupcast frame. For example, the groupcast frame privacy enhancement field occupies 1 bit (of course, it may also occupy more bits). A value of 1 indicates that the STA supports the reception station address, frame sequence number and packet number for encryption that are obfuscated for groupcast frame, and a value of 0 indicates that the STA does not support the reception station address, frame sequence number and packet number for encryption that are obfuscated for groupcast frame; or, the value of 0 indicates that the STA supports the reception station address, frame sequence number and packet number for encryption that are obfuscated for groupcast frame, and the value of 1 indicates that the STA does not support the reception station address, the frame sequence number and packet number for encryption that are obfuscated for groupcast frame. It should be noted that, in a case of implementing the same feature, the groupcast frame privacy enhancement field may also be replaced with other names, which is not limited in the embodiments of the present application.

Specifically, the service specific MAC address field is used to indicate whether the STA supports a sensing specific MAC address of a STA and a ranging specific MAC address of a STA. For example, the service specific MAC address field occupies 1 bit (of course, it may also occupy more bits). A value of 1 indicates that the STA supports the sensing specific MAC address of the STA and the ranging specific MAC address of the STA, and a value of 0 indicates that the STA does not support the sensing specific MAC address of the STA and the ranging specific MAC address of the STA; or, the value of 0 indicates that the STA supports the sensing specific MAC address of the STA and the ranging specific MAC address of the STA, and the value of 1 indicates that the STA does not support the sensing specific MAC address of the STA and the ranging specific MAC address of the STA. It should be noted that, in a case of implementing the same feature, the service specific MAC address field may also be replaced with other names, which is not limited in the embodiments of the present application.

In some embodiments, the second element is an extended capabilities element, or the second element is a robust security network element (RSNE), or the second element is a robust security network extension element (RSNXE), or the second element is a newly defined enhanced privacy capabilities element. Of course, the second element may also be other elements, which is not limited in the embodiments of the present application.

For example, in a case where the second element is the extended capabilities element, the second element may be as shown in FIG. 3.

For another specific example, in a case where the second element is the robust security network extension element, the second element may be as shown in FIG. 4.

In some embodiments, the second frame is at least one of: a probe request frame, an association request frame, or a reassociation request frame. Of course, the first frame may also be other frames, which is not limited in the present application.

In some embodiments, a STA that does not use the client privacy enhancement feature shall not perform a point-to-point signaling (e.g., tunneled direct link setup (TDLS)) interaction with a STA that uses the client privacy enhancement feature.

The signaling interaction between the STA and the AP is described in detail below in the embodiments of the present application through embodiment 4 to embodiment 6.

In embodiment 4, the AP uses a third set of target features to perform the signaling interaction with the STA; where the third set of target features is an intersection of the set of client privacy enhancement features supported by the AP and the set of client privacy enhancement features supported by the STA.

In some implementations, in a case where the STA supports the first subset of features and the AP supports the first subset of features, the third set of target features is the first subset of features.

In some implementations, in a case where the STA supports the first subset of features and the AP supports the first subset of features and the second subset of features, the third set of target features is the first subset of features.

In some implementations, in a case where the STA supports the first subset of features and the second subset of features and the AP supports the first subset of features, the third set of target features is the first subset of features.

In some implementations, in a case where the STA supports the first subset of features and the second subset of features and the AP supports the first subset of features and the second subset of features, the third set of target features is the first subset of features and the second subset of features.

In some implementations, an AP that supports a client privacy enhancement feature does not allow an access of a STA that does not support the client privacy enhancement feature. For example, in a case where the STA does not support the first subset of features and the AP supports the first subset of features, the AP does not use the third subset of features to perform the signaling interaction with the STA; and/or, in a case where the STA does not support the first subset of features and the AP supports the first subset of features and the second subset of features, the AP does not use the third subset of features and the second subset of features to perform the signaling interaction with the STA.

In some implementations of embodiment 4, the subset of features supported by the AP and the subset of features supported by the STA may be as shown in Table 2 above, and under different subset of features, the subset of features used by the STA when performing the signaling interaction with the AP may be as shown in Table 2 above. In Table 2, CPE1 represents the first subset of features, CPE2 represents the second subset of features, BPE1 represents the third subset of features, BPE2 represents the fourth subset of features, and BPE3 represents the fifth subset of features. The detailed description may refer to the above description about the STA.

In embodiment 5, the AP uses a fourth set of target features to perform the signaling interaction with the STA; the fourth set of target features is part or all of the set of privacy enhancement features supported by the AP, where the set of privacy enhancement features includes the set of client privacy enhancement features and/or the set of basic service set privacy enhancement features. Further, the AP does not allow an access of a STA that supports fewer set of basic service set privacy enhancement features than the set of basic service set privacy enhancement features supported by the AP.

In some implementations, in a case where the STA supports the first subset of features and the third subset of features, and the AP supports the first subset of features and the third subset of features, the fourth set of target features is the first subset of features and the third subset of features.

In some implementations, in a case where the STA supports the first subset of features and the third subset of features, and the AP supports the first subset of features, the second subset of features and the third subset of features, the fourth set of target features is the first subset of features and the third subset of features.

In some implementations, in a case where the STA supports the first subset of features, the second subset of features and the third subset of features, and the AP supports the first subset of features and the third subset of features, the fourth set of target features is the first subset of features and the third subset of features.

In some implementations, in a case where the STA supports the first subset of features, the second subset of features and the third subset of features, and the AP supports the first subset of features, the second subset of features and the third subset of features, the fourth set of target features is the first subset of features, the second subset of features and the third subset of features.

In some implementations, in a case where the STA supports the first subset of features, the second subset of features, the third subset of features and the fourth subset of features, and the AP supports the first subset of features and the third subset of features, the fourth set of target features is the first subset of features and the third subset of features.

In some implementations, in a case where the STA supports the first subset of features, the second subset of features, the third subset of features and the fourth subset of features, and the AP supports the first subset of features, the second subset of features and the third subset of features, the fourth set of target features is the first subset of features, the second subset of features and the third subset of features.

In some implementations, in a case where the STA supports the first subset of features, the second subset of features, the third subset of features and the fourth subset of features, and the AP supports the first subset of features, the second subset of features, the third subset of features and the fourth subset of features, the fourth set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features and the third subset of features, the fourth set of target features is the first subset of features and the third subset of features.

In some implementations, in a case where the STA supports the first subset of features, the second subset of features, the third subset of features, the fourth subset of features and the fifth subset of features, and the AP supports the first subset of features, the second subset of features and the third subset of features, the fourth set of target features is the first subset of features, the second subset of features and the third subset of features.

In some implementations, in a case where the STA supports the first subset of features, the second subset of features, the third subset of features, the fourth subset of features and the fifth subset of features, and the AP supports the first subset of features, the second subset of features, the third subset of features and the fourth subset of features, the fourth set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the fourth set of target features is the first subset of features, the second subset of features, the third subset of features, the fourth subset of features and the fifth subset of features.

In some implementations, in a case where the STA does not support the first subset of features, the AP does not support the access of the STA.

In some implementations, in a case where the STA supports the first subset of features, and the AP supports the first subset of features and the third subset of features, the AP does not support the access of the STA.

In some implementations, in a case where the STA supports the first subset of features, and the AP supports the first subset of features, the second subset of features and the third subset of features, the AP does not support the access of the STA.

In some implementations, in a case where the STA supports the first subset of features, and the AP supports the first subset of features, the second subset of features, the third subset of features and the fourth subset of features, the AP does not support the access of the STA.

In some implementations, in a case where the STA supports the first subset of features, and the AP supports the first subset of features, the second subset of features, the third subset of features, the fourth subset of features and the fifth subset of features, the AP does not support the access of the STA.

In some implementations, in a case where the STA supports the first subset of features and the third subset of features, and the AP supports the first subset of features, the second subset of features, the third subset of features and the fourth subset of features, the AP does not support the access of the STA.

In some implementations, in a case where the STA supports the first subset of features and the third subset of features, and the AP supports the first subset of features, the second subset of features, the third subset of features, the fourth subset of features and the fifth subset of features, the AP does not support the access of the STA.

In some implementations, in a case where the STA supports the first subset of features, the second subset of features and the third subset of features, and the AP supports the first subset of features, the second subset of features, the third subset of features and the fourth subset of features, the AP does not support the access of the STA.

In some implementations, in a case where the STA supports the first subset of features, the second subset of features, and the third subset of features, and the AP supports the first subset of features, the second subset of features, the third subset of features, the fourth subset of features, and the fifth subset of features, the AP does not support the access of the STA.

In some implementations, in a case where the STA supports the first subset of features, the second subset of features, the third subset of features and the fourth subset of features, and the AP supports the first subset of features, the second subset of features, the third subset of features, the fourth subset of features and the fifth subset of features, the AP does not support the access of the STA.

In some implementations of the embodiment 5, the subset of features supported by the AP and the subset of features supported by the STA may be as shown in Table 4 above, and under different subset of features, the subset of features used by the STA when performing the signaling interaction with the AP may be as shown in Table 4 above. In Table 4, CPE1 represents the first subset of features, CPE2 represents the second subset of features, BPE1 represents the third subset of features, BPE2 represents the fourth subset of features, and BPE3 represents the fifth subset of features. In Table 4, "N" indicates that the AP does not support the access of the corresponding STA. The detailed description may refer to the above description about the STA.

In embodiment 6, the AP uses the fourth set of target features to perform the signaling interaction with the STA; the fourth set of target features is part or all of the set of privacy enhancement features supported by the AP, where the set of privacy enhancement features includes the set of client privacy enhancement features and/or the set of basic service set privacy enhancement features. Further, the AP allows an access of a STA that supports fewer set of basic service set privacy enhancement features than the set of basic service set privacy enhancement features supported by the AP.

In some implementations, in a case where the STA supports at least the first subset of features and the AP supports at least the first subset of features, the fourth set of target features is an intersection of the set of privacy enhancement features supported by the STA and the set of privacy enhancement features supported by the AP, the set of privacy enhancement features includes the set of basic service set privacy enhancement features and/or the set of client privacy enhancement features.

In some implementations, in a case where the STA supports the first subset of features and the third subset of features, and the AP supports the first subset of features and the third subset of features, the fourth set of target features is the first subset of features and the third subset of features.

In some implementations, in a case where the STA supports the first subset of features and the third subset of features, and the AP supports the first subset of features, the second subset of features and the third subset of features, the fourth set of target features is the first subset of features and the third subset of features.

In some implementations, in a case where the STA supports the first subset of features and the third subset of features, and the AP supports the first subset of features, the second subset of features, the third subset of features and the fourth subset of features, the fourth set of target features is the first subset of features and the third subset of features.

In some implementations, in a case where the STA supports the first subset of features and the third subset of features, and the AP supports the first subset of features, the second subset of features, the third subset of features, the fourth subset of features, and the fifth subset of features, the second set of target features is the first subset of features and the third subset of features.

In some implementations, in a case where the STA supports the first subset of features, the second subset of features, and the third subset of features, and the AP supports the first subset of features and the third subset of features, the fourth set of target features is the first subset of features and the third subset of features.

In some implementations, in a case where the STA supports the first subset of features, the second subset of features, and the third subset of features, and the AP supports the first subset of features, the second subset of features, and the third subset of features, the fourth set of target features is the first subset of features, the second subset of features, and the third subset of features.

In some implementations, in a case where the STA supports the first subset of features, the second subset of features, and the third subset of features, and the AP supports the first subset of features, the second subset of features, the third subset of features, and the fourth subset of features, the fourth set of target features is the first subset of features, the second subset of features, and the third subset of features.

In some implementations, in a case where the STA supports the first subset of features, the second subset of features, and the third subset of features, and the AP supports the first subset of features, the second subset of features, the third subset of features, the fourth subset of features, and the fifth subset of features, the fourth set of target features is the first subset of features, the second subset of features, and the third subset of features.

In some implementations, in a case where the STA supports the first subset of features, the second subset of features, the third subset of features and the fourth subset of features, and the AP supports the first subset of features and the third subset of features, the fourth set of target features is the first subset of features and the third subset of features.

In some implementations, in a case where the STA supports the first subset of features, the second subset of features, the third subset of features, and the fourth subset of features, and the AP supports the first subset of features, the second subset of features, and the third subset of features, the fourth set of target features is the first subset of features, the second subset of features, and the third subset of features.

In some implementations, in a case where the STA supports the first subset of features, the second subset of features, the third subset of features and the fourth subset of features, and the AP supports the first subset of features, the second subset of features, the third subset of features and the fourth subset of features, the fourth set of target features is the first subset of features, the second subset of features, the third subset of features and the fourth subset of features.

In some implementations, in a case where the STA supports the first subset of features, the second subset of features, the third subset of features, and the fourth subset of features, and the AP supports the first subset of features, the second subset of features, the third subset of features, the fourth subset of features, and the fifth subset of features, the fourth set of target features is the first subset of features, the second subset of features, the third subset of features, and the fourth subset of features.

In some implementations, in a case where the STA supports the first subset of features, the second subset of features, the third subset of features, the fourth subset of features and the fifth subset of features, and the AP supports the first subset of features and the third subset of features, the fourth set of target features is the first subset of features and the third subset of features.

In some implementations, in a case where the STA supports the first subset of features, the second subset of features, the third subset of features, the fourth subset of features and the fifth subset of features, and the AP supports the first subset of features, the second subset of features and the third subset of features, the fourth set of target features is the first subset of features, the second subset of features and the third subset of features.

In some implementations, in a case where the STA supports the first subset of features, the second subset of features, the third subset of features, the fourth subset of features and the fifth subset of features, and the AP supports the first subset of features, the second subset of features, the third subset of features and the fourth subset of features, the fourth set of target features is the first subset of features, the second subset of features, the third subset of features and the fourth subset of features.

In some implementations, in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the fourth set of target features is the first subset of features, the second subset of features, the third subset of features, the fourth subset of features and the fifth subset of features.

In some implementations, in a case where the STA does not support the first subset of features, the STA does not use the privacy enhancement feature in a case of accessing the AP.

In some implementations, in a case where the STA supports the first subset of features, and the AP supports the first subset of features and the third subset of features, the STA does not use the privacy enhancement feature in a case of accessing the AP.

In some implementations, in a case where the STA supports the first subset of features, and the AP supports the first subset of features, the second subset of features, and the third subset of features, the STA does not use the privacy enhancement feature in a case of accessing the AP.

In some implementations, in a case where the STA supports the first subset of features, and the AP supports the first subset of features, the second subset of features, the third subset of features, and the fourth subset of features, the STA does not use the privacy enhancement feature in a case of accessing the AP.

In some implementations, in a case where the STA supports the first subset of features, and the AP supports the first subset of features, the second subset of features, the third subset of features, the fourth subset of features and the fifth subset of features, the STA does not use the privacy enhancement feature in a case of accessing the AP.

In some implementations of the embodiment 6, the subset of features supported by the AP and the subset of features supported by the STA may be as shown in Table 5 above, and under different subset of features, the subset of features used by the STA when performing the signaling interaction with the AP may be as shown in Table 5 above. In Table 5, CPE1 represents the first subset of features, CPE2 represents the second subset of features, BPE1 represents the third subset of features, BPE2 represents the fourth subset of features, and BPE3 represents the fifth subset of features.

Therefore, in the embodiments of the present application, the set of basic service set privacy enhancement features maintained by the AP includes the first subset of features and/or the second subset of features, and the set of basic service set privacy enhancement features maintained by the AP includes at least one of the third subset of features, the fourth subset of features or the fifth subset of features. By reasonably dividing into different subsets of features, different feature selections may be supported.

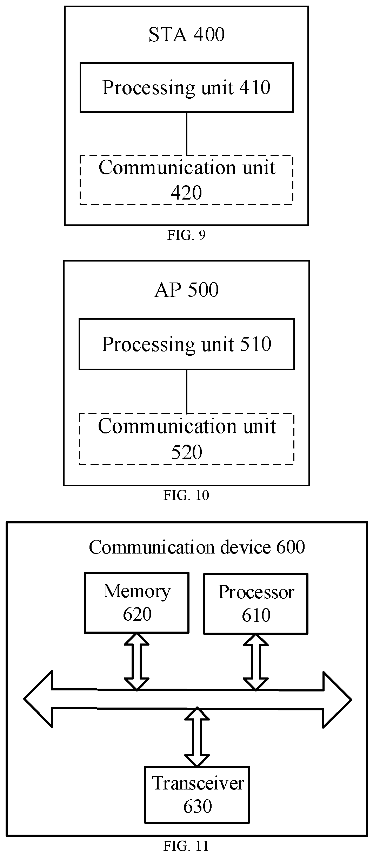

The method embodiments of the present application are described in detail above in combination with FIGS. 2 to 8. The apparatus embodiments of the present application will be described in detail below in combination with FIGS. 9 to 13. It should be understood that the apparatus embodiments and the method embodiments correspond to each other, and similar descriptions may refer to the method embodiments.

FIG. 9 shows a schematic block diagram of a STA 400 according to the embodiments of the present application. As shown in FIG. 9, the STA 400 includes:
a processing unit 410, configured to maintain a set of basic service set privacy enhancement features and/or a set of client privacy enhancement features;
where the set of client privacy enhancement features includes a first subset of features and/or a second subset of features, and the set of basic service set privacy enhancement features includes at least one of a third subset of features, a fourth subset of features or a fifth subset of features;
where the first subset of features includes at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of a STA that are randomly changed; protected source address and destination address; or a protected private MAC address of the STA;
where the second subset of features includes at least one of the following features: a privacy enhancement feature for preventing fingerprint analysis; a reduced beacon frame; a protected association request or protected association response frame, and a protected reassociation request or protected reassociation response frame; a frame sequence number, a scrambler seed, a packet number for encryption and a traffic identifier (TID) of a STA that are randomly changed; or a protected MAC header;
where the third subset of features includes at least one of the following features: a protected source address and destination address, or a changed service set identifier (SSID);
where the fourth subset of features includes at least one of the following features: a changed SSID; obfuscation of parameter information of an AP in an access point multi-link device (AP MLD) or a multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
where the fifth subset of features includes at least one of the following features: a sensing specific MAC address of the STA, or a ranging specific MAC address of the STA.

In some embodiments, in the set of client privacy enhancement features, the first subset of features is a subset of features that is mandatorily supported by the STA, and/or the second subset of features is a subset of features that is optionally supported by the STA; and/or,
in the set of basic service set privacy enhancement features, the third subset of features is a subset of features that is optionally supported by the STA, and/or the fourth subset of features is a subset of features that is optionally supported by the STA, and/or the fifth subset of features is a subset of features that is optionally supported by the STA.

In some embodiments, the STA 400 includes a communication unit 420;
the communication unit 420 is configured to receive a first frame;
the first frame includes a first element, and the first element is used to indicate capability information related to a privacy enhancement feature of the AP.

In some embodiments, the first element includes at least one of: a client privacy enhancement features supported field, a basic service set privacy enhancement features supported field, a partial basic service set privacy enhancement features supported field, a reduced scanning field, a protected association frame field, a random numbers field, an MAC header protection field, a random SSID field, an AP identity privacy enhancement field, a unicast management frame encryption field, a randomized beacon frame transmission time field, a groupcast frame privacy enhancement field, or a service specific MAC address field;
the client privacy enhancement features supported field is used to indicate whether the AP supports a mandatory set of privacy enhancement features related to the STA, the basic service set privacy enhancement features supported field is used to indicate whether the AP supports a mandatory set of privacy enhancement features related to a basic service set, the partial basic service set privacy enhancement features supported field is used to indicate whether the AP supports an access of a STA that implements partial privacy enhancement features, the reduced scanning field is used to indicate whether the AP supports a reduced probe request frame or a reduced probe response frame and the reduced beacon frame, the protected association frame field is used to indicate whether the AP supports the protected association request frame or protected association response frame and the protected reassociation request frame or protected reassociation response frame, the random numbers field is used to indicate whether the AP supports the frame sequence number, the scrambler seed, the packet number for encryption and the TID of the STA that are randomly changed, the MAC header protection field is used to indicate whether the AP supports the protected MAC header, the random SSID field is used to indicate whether the AP supports the changed SSID, the AP identity privacy enhancement field is used to indicate whether the AP supports the obfuscation of the parameter information of the AP in the AP MLD or the multi-AP BSSID and the obfuscated AP identifier in the RNR, the unicast management frame encryption field is used to indicate whether the AP supports the encrypted unicast management frame, the randomized beacon frame transmission time field is used to indicate whether the AP supports the randomized beacon frame transmission time, the groupcast frame privacy enhancement field is used to indicate whether the AP supports the reception station address, the frame sequence number and the packet number for encryption that are obfuscated for groupcast frame, and the service specific MAC address field is used to indicate whether the AP supports the sensing specific MAC address of the STA and the ranging specific MAC address of the STA.

In some embodiments, the first element is an extended capabilities element, or the first element is a robust security network element, or the first element is a robust security network extension element, or the first element is a newly defined enhanced privacy capabilities element.

In some embodiments, the first frame is at least one of:
the beacon frame, the probe response frame, the association response frame, or the reassociation response frame.

In some embodiments, the STA 400 further includes a communication unit 420;
the communication unit 420 is configured to perform the signaling interaction with the AP using a first set of target features;
the first set of target features is an intersection of the set of client privacy enhancement features supported by the STA and the set of client privacy enhancement features supported by the AP.

In some implementations, in a case where the STA supports the first subset of features and the AP supports the first subset of features, the first set of target features is the first subset of features; and/or,
in a case where the STA supports the first subset of features and the AP supports the first subset of features and the second subset of features, the first set of target features is the first subset of features; and/or,
in a case where the STA supports the first subset of features and the second subset of features and the AP supports the first subset of features, the first set of target features is the first subset of features; and/or,
in a case where the STA supports the first subset of features and the second subset of features and the AP supports the first subset of features and the second subset of features, the first set of target features is the first subset of features and the second subset of features.

In some implementations, an AP that supports a client privacy enhancement feature does not allow an access of a STA that does not support a client privacy enhancement feature.

In some embodiments, in a case where the STA does not support the first subset of features and the AP supports the first subset of features, the STA does not use the first subset of features to perform the signaling interaction with the AP; and/or
in a case where the STA does not support the first subset of features and the AP supports the first subset of features and the second subset of features, the STA does not use the first subset of features and the second subset of features to perform the signaling interaction with the AP.

In some embodiments, the STA 400 further includes a communication unit 420;
the communication unit 420 is configured to perform the signaling interaction with the AP using a second set of target features; and
the second set of target features is part or all of the set of privacy enhancement features supported by the AP, where the set of privacy enhancement features includes the set of client privacy enhancement features and/or the set of basic service set privacy enhancement features.

In some embodiments, the AP does not allow an access of a STA that supports fewer set of basic service set privacy enhancement features than the set of basic service set privacy enhancement features supported by the AP.

In some embodiments, in a case where the STA supports the first subset of features and the third subset of features, and the AP supports the first subset of features and the third subset of features, the second set of target features is the first subset of features and the third subset of features; and/or,
in a case where the STA supports the first subset of features and the third subset of features, and the AP supports the first subset of features, the second subset of features and the third subset of features, the second set of target features is the first subset of features and the third subset of features; and/or,
in a case where the STA supports the first subset of features, the second subset of features, and the third subset of features, and the AP supports the first subset of features and the third subset of features, the second set of target features is the first subset of features and the third subset of features; and/or,
in a case where the STA supports the first subset of features, the second subset of features, and the third subset of features, and the AP supports the first subset of features, the second subset of features, and the third subset of features, the second set of target features is the first subset of features, the second subset of features, and the third subset of features; and/or,
in a case where the STA supports the first subset of features, the second subset of features, the third subset of features and the fourth subset of features, and the AP supports the first subset of features and the third subset of features, the second set of target features is the first subset of features and the third subset of features; and/or,
in a case where the STA supports the first subset of features, the second subset of features, the third subset of features, and the fourth subset of features, and the AP supports the first subset of features, the second subset of features, and the third subset of features, the second set of target features is the first subset of features, the second subset of features, and the third subset of features; and/or,
in a case where the STA supports the first subset of features, the second subset of features, the third subset of features and the fourth subset of features, and the AP supports the first subset of features, the second subset of features, the third subset of features and the fourth subset of features, the second set of target features is the first subset of features, the second subset of features, the third subset of features and the fourth subset of features; and/or,
in a case where the STA supports the first subset of features, the second subset of features, the third subset of features, the fourth subset of features and the fifth subset of features, and the AP supports the first subset of features and the third subset of features, the second set of target features is the first subset of features and the third subset of features; and/or,
in a case where the STA supports the first subset of features, the second subset of features, the third subset of features, the fourth subset of features and the fifth subset of features, and the AP supports the first subset of features, the second subset of features and the third subset of features, the second set of target features is the first subset of features, the second subset of features and the third subset of features; and/or,
in a case where the STA supports the first subset of features, the second subset of features, the third subset of features, the fourth subset of features and the fifth subset of features, and the AP supports the first subset of features, the second subset of features, the third subset of features and the fourth subset of features, the second set of target features is the first subset of features, the second subset of features, the third subset of features and the fourth subset of features; and/or,
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the second set of target features is the first subset of features, the second subset of features, the third subset of features, the fourth subset of features and the fifth subset of features.

In some embodiments, in a case where the STA does not support the first subset of features, the AP does not support an access of the STA; and/or,
in a case where the STA supports the first subset of features, and the AP supports the first subset of features and the third subset of features, the AP does not support the access of the STA; and/or,
in a case where the STA supports the first subset of features, and the AP supports the first subset of features, the second subset of features, and the third subset of features, the AP does not support the access of the STA; and/or,
in a case where the STA supports the first subset of features, and the AP supports the first subset of features, the second subset of features, the third subset of features, and the fourth subset of features, the AP does not support the access of the STA; and/or,
in a case where the STA supports the first subset of features, and the AP supports the first subset of features, the second subset of features, the third subset of features, the fourth subset of features, and the fifth subset of features, the AP does not support the access of the STA; and/or,
in a case where the STA supports the first subset of features and the third subset of features, and the AP supports the first subset of features, the second subset of features, the third subset of features, and the fourth subset of features, the AP does not support the access of the STA; and/or,
in a case where the STA supports the first subset of features and the third subset of features, and the AP supports the first subset of features, the second subset of features, the third subset of features, the fourth subset of features, and the fifth subset of features, the AP does not support the access of the STA; and/or,
in a case where the STA supports the first subset of features, the second subset of features, and the third subset of features, and the AP supports the first subset of features, the second subset of features, the third subset of features, and the fourth subset of features, the AP does not support the access of the STA; and/or,
in a case where the STA supports the first subset of features, the second subset of features, and the third subset of features, and the AP supports the first subset of features, the second subset of features, the third subset of features, the fourth subset of features, and the fifth subset of features, the AP does not support the access of the STA; and/or,
in a case where the STA supports the first subset of features, the second subset of features, the third subset of features and the fourth subset of features, and the AP supports the first subset of features, the second subset of features, the third subset of features, the fourth subset of features and the fifth subset of features, the AP does not support the access of the STA.

In some embodiments, the AP allows an access of a STA that supports fewer set of basic service set privacy enhancement features than the set of basic service set privacy enhancement features supported by the AP.

In some embodiments, in a case where the STA supports at least the first subset of features and the AP supports at least the first subset of features, the second set of target features is an intersection of the set of privacy enhancement features supported by the STA and the set of privacy enhancement features supported by the AP; where the set of privacy enhancement features includes the set of client privacy enhancement features and/or the set of basic service set privacy enhancement features.

In some embodiments, in a case where the STA supports the first subset of features and the third subset of features, and the AP supports the first subset of features and the third subset of features, the second set of target features is the first subset of features and the third subset of features; and/or,
in a case where the STA supports the first subset of features and the third subset of features, and the AP supports the first subset of features, the second subset of features and the third subset of features, the second set of target features is the first subset of features and the third subset of features; and/or,
in a case where the STA supports the first subset of features and the third subset of features, and the AP supports the first subset of features, the second subset of features, the third subset of features and the fourth subset of features, the second set of target features is the first subset of features and the third subset of features; and/or,
in a case where the STA supports the first subset of features and the third subset of features, and the AP supports the first subset of features, the second subset of features, the third subset of features, the fourth subset of features, and the fifth subset of features, the second set of target features is the first subset of features and the third subset of features; and/or,
in a case where the STA supports the first subset of features, the second subset of features, and the third subset of features, and the AP supports the first subset of features and the third subset of features, the second set of target features is the first subset of features and the third subset of features; and/or,
in a case where the STA supports the first subset of features, the second subset of features, and the third subset of features, and the AP supports the first subset of features, the second subset of features, and the third subset of features, the second set of target features is the first subset of features, the second subset of features, and the third subset of features; and/or,
in a case where the STA supports the first subset of features, the second subset of features, and the third subset of features, and the AP supports the first subset of features, the second subset of features, the third subset of features, and the fourth subset of features, the second set of target features is the first subset of features, the second subset of features, and the third subset of features; and/or,
in a case where the STA supports the first subset of features, the second subset of features, and the third subset of features, and the AP supports the first subset of features, the second subset of features, the third subset of features, the fourth subset of features, and the fifth subset of features, the second set of target features is the first subset of features, the second subset of features, and the third subset of features; and/or,
in a case where the STA supports the first subset of features, the second subset of features, the third subset of features and the fourth subset of features, and the AP supports the first subset of features and the third subset of features, the second set of target features is the first subset of features and the third subset of features; and/or,
in a case where the STA supports the first subset of features, the second subset of features, the third subset of features, and the fourth subset of features, and the AP supports the first subset of features, the second subset of features, and the third subset of features, the second set of target features is the first subset of features, the second subset of features, and the third subset of features; and/or,
in a case where the STA supports the first subset of features, the second subset of features, the third subset of features and the fourth subset of features, and the AP supports the first subset of features, the second subset of features, the third subset of features and the fourth subset of features, the second set of target features is the first subset of features, the second subset of features, the third subset of features and the fourth subset of features; and/or,
in a case where the STA supports the first subset of features, the second subset of features, the third subset of features, and the fourth subset of features, and the AP supports the first subset of features, the second subset of features, the third subset of features, the fourth subset of features, and the fifth subset of features, the second set of target features is the first subset of features, the second subset of features, the third subset of features, and the fourth subset of features; and/or,
in a case where the STA supports the first subset of features, the second subset of features, the third subset of features, the fourth subset of features and the fifth subset of features, and the AP supports the first subset of features and the third subset of features, the second set of target features is the first subset of features and the third subset of features; and/or,
in a case where the STA supports the first subset of features, the second subset of features, the third subset of features, the fourth subset of features and the fifth subset of features, and the AP supports the first subset of features, the second subset of features and the third subset of features, the second set of target features is the first subset of features, the second subset of features and the third subset of features; and/or,
in a case where the STA supports the first subset of features, the second subset of features, the third subset of features, the fourth subset of features and the fifth subset of features, and the AP supports the first subset of features, the second subset of features, the third subset of features and the fourth subset of features, the second set of target features is the first subset of features, the second subset of features, the third subset of features and the fourth subset of features; and/or,
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the second set of target features is the first subset of features, the second subset of features, the third subset of features, the fourth subset of features and the fifth subset of features.

In some embodiments, in a case where the STA does not support the first subset of features, the STA does not use the privacy enhancement feature in a case of accessing the AP; and/or,
in a case where the STA supports the first subset of features, and the AP supports the first subset of features and the third subset of features, the STA does not use the privacy enhancement feature in a case of accessing the AP; and/or,
in a case where the STA supports the first subset of features, and the AP supports the first subset of features, the second subset of features, and the third subset of features, the STA does not use the privacy enhancement feature in a case of accessing the AP; and/or,
in a case where the STA supports the first subset of features, and the AP supports the first subset of features, the second subset of features, the third subset of features, and the fourth subset of features, the STA does not use the privacy enhancement feature in a case of accessing the AP; and/or,
in a case where the STA supports the first subset of features, and the AP supports the first subset of features, the second subset of features, the third subset of features, the fourth subset of features and the fifth subset of features, the STA does not use the privacy enhancement feature in a case of accessing the AP.

In some embodiments, in a case where the AP is a mobile AP, the AP supports at least the third subset of features.

In some embodiments, a STA that does not use the client privacy enhancement feature and a STA that uses the client privacy enhancement feature are not allowed to perform point-to-point signaling interaction.

In some embodiments, the communication unit may be a communication interface or a transceiver, or an input/output interface of a communication chip or a system on chip. The processing unit above may be one or more processors.

It should be understood that the STA 400 according to the embodiments of the present application may correspond to the STA in the method embodiments of the present application, and the above and other operations and/or function of various units in the STA 400 are respectively for implementing the corresponding process of the STA in the method 200 shown in FIG. 2, which will not be repeated here for the sake of brevity.

FIG. 10 shows a schematic block diagram of an AP 500 according to the embodiments of the present application. As shown in FIG. 10, the AP 500 includes:
a processing unit 510, configured to maintain a set of basic service set privacy enhancement features and/or a set of client privacy enhancement features;
the set of client privacy enhancement features includes a first subset of features and/or a second subset of features, and the set of basic service set privacy enhancement features includes at least one of a third subset of features, a fourth subset of features or a fifth subset of features;
the first subset of features includes at least one of the following features: a privacy enhancement feature related to a medium access control (MAC) address or identifier; a security key established in a pre-association authentication; an over the air medium access control (OTA MAC) address and an association identifier (AID) or unassociation identifier (UID) of a station (STA) that are randomly changed; protected source address and destination address; or a protected private MAC address of the STA;
the second subset of features includes at least one of the following features: a privacy enhancement feature for preventing fingerprint analysis; a reduced beacon frame; a protected association request or protected association response frame, and a protected reassociation request or protected reassociation response frame; a frame sequence number, a scrambler seed, a packet number for encryption and a traffic identifier (TID) of an STA that are randomly changed; or a protected MAC header;
the third subset of features includes at least one of the following features: protected source address and destination address; or a changed service set identifier (SSID);
where the fourth subset of features includes at least one of the following features: a changed SSID; obfuscation of parameter information of an AP in an access point multi-link device (AP MLD) or a multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
the fifth subset of features includes at least one of the following features: a sensing specific MAC address of the STA, or a ranging specific MAC address of the STA.

In some embodiments, in the set of client privacy enhancement features, the first subset of features is a subset of features that is mandatorily supported by the AP, and/or the second subset of features is a subset of features that is optionally supported by the AP, or, the second subset of features is a subset of features that is mandatorily supported by the AP; and/or
in the set of basic service set privacy enhancement features, the third subset of features is a subset of features that is mandatorily supported by the mobile AP, and/or the fourth subset of features is a subset of features that is optionally supported by the AP, and/or the fifth subset of features is a subset of features that is optionally supported by the AP.

In some embodiments, the AP 500 includes a communication unit 520;
the communication unit 520 is configured to receive a second frame;
the second frame includes a second element, and the second element is used to indicate capability information related to the privacy enhancement feature of the STA.

In some embodiments, the second element includes at least one of: a client privacy enhancement features supported field, a basic service set privacy enhancement features supported field, a partial basic service set privacy enhancement features supported field, a reduced scanning field, a protected association frame field, a random numbers field, an MAC header protection field, a random SSID field, an AP identifier privacy enhancement field, a unicast management frame encryption field, a randomized beacon frame transmission time field, a groupcast frame privacy enhancement field, or a service specific MAC address field;
where the client privacy enhancement features supported field is used to indicate whether the STA supports a mandatory set of privacy enhancement features related to the STA, the basic service set privacy enhancement features supported field is used to indicate whether the STA supports a mandatory set of privacy enhancement features related to a basic service set, the partial basic service set privacy enhancement features supported field is used to indicate whether the STA supports an access of a STA that implements partial privacy enhancement features, the reduced scanning field is used to indicate whether the STA supports a reduced probe request frame or a reduced probe response frame and the reduced beacon frame, the protected association frame field is used to indicate whether the STA supports the protected association request frame or protected association response frame and the protected reassociation request frame or protected reassociation response frame, the random numbers field is used to indicate whether the STA supports the frame sequence number, the scrambler seed, the packet number for encryption and the TID of the STA that are randomly changed, the MAC header protection field is used to indicate whether the STA supports the protected MAC header, the random SSID field is used to indicate whether the STA supports the changed SSID, the AP identity privacy enhancement field is used to indicate whether the STA supports the obfuscation of the parameter information of the AP in the AP MLD or the multi-AP BSSID and the obfuscated AP identifier in the RNR, the unicast management frame encryption field is used to indicate whether the STA supports the encrypted unicast management frame, the randomized beacon frame transmission time field is used to indicate whether the STA supports the randomized beacon frame transmission time, the groupcast frame privacy enhancement field is used to indicate whether the STA supports the reception station address, the frame sequence number and the packet number for encryption that are obfuscated for groupcast frame, and the service specific MAC address field is used to indicate whether the STA supports the sensing specific MAC address of the STA and the ranging specific MAC address of the STA.

In some embodiments, the second element is the extended capabilities element, or the second element is the robust security network element, or the second element is the robust security network extension element, or the second element is the newly defined enhanced privacy capabilities element.

In some embodiments, the second frame is at least one of:
the probe request frame, the association request frame, or the reassociation request frame.

In some embodiments, the AP 500 further includes the communication unit 520;
the communication unit 520 is configured to perform the signaling interaction with the STA using a third set of target features;
where the third set of target features is an intersection of the set of client privacy enhancement features supported by the AP and the set of client privacy enhancement features supported by the STA.

In some embodiments, in a case where the STA supports the first subset of features and the AP supports the first subset of features, the third set of target features is the first subset of features; and/or,
in a case where the STA supports the first subset of features and the AP supports the first subset of features and the second subset of features, the third set of target features is the first subset of features; and/or,
in a case where the STA supports the first subset of features and the second subset of features and the AP supports the first subset of features, the third set of target features is the first subset of features; and/or,
in a case where the STA supports the first subset of features and the second subset of features and the AP supports the first subset of features and the second subset of features, the third set of target features is the first subset of features and the second subset of features.

In some embodiments, the AP that supports a client privacy enhancement feature does not allow an access of a STA that does not support the client privacy enhancement feature.

In some embodiments, in a case where the STA does not support the first subset of features and the AP supports the first subset of features, the AP does not use the third subset of features to perform the signaling interaction with the STA; and/or,
in a case where the STA does not support the first subset of features and the AP supports the first subset of features and the second subset of features, the AP does not use the third subset of features and the second subset of features to perform the signaling interaction with the STA.

In some embodiments, the AP 500 further includes the communication unit 520;
the communication unit 520 is configured to perform the signaling interaction with the STA using a fourth set of target features;
the fourth set of target features is part or all of the set of privacy enhancement features supported by the AP, and the set of privacy enhancement features includes the set of basic service set privacy enhancement features and/or the set of client privacy enhancement features.

In some embodiments, the AP does not allow the access of the STA that supports fewer set of basic service set privacy enhancement features than the set of basic service set privacy enhancement features supported by the AP.

In some embodiments, in a case where the STA supports the first subset of features and the third subset of features, and the AP supports the first subset of features and the third subset of features, the fourth set of target features is the first subset of features and the third subset of features; and/or,
in a case where the STA supports the first subset of features and the third subset of features, and the AP supports the first subset of features, the second subset of features and the third subset of features, the fourth set of target features is the first subset of features and the third subset of features; and/or,
in a case where the STA supports the first subset of features, the second subset of features, and the third subset of features, and the AP supports the first subset of features and the third subset of features, the fourth set of target features is the first subset of features and the third subset of features; and/or,
in a case where the STA supports the first subset of features, the second subset of features, and the third subset of features, and the AP supports the first subset of features, the second subset of features, and the third subset of features, the fourth set of target features is the first subset of features, the second subset of features, and the third subset of features; and/or,
in a case where the STA supports the first subset of features, the second subset of features, the third subset of features and the fourth subset of features, and the AP supports the first subset of features and the third subset of features, the fourth set of target features is the first subset of features and the third subset of features; and/or,
in a case where the STA supports the first subset of features, the second subset of features, the third subset of features, and the fourth subset of features, and the AP supports the first subset of features, the second subset of features, and the third subset of features, the fourth set of target features is the first subset of features, the second subset of features, and the third subset of features; and/or,
in a case where the STA supports the first subset of features, the second subset of features, the third subset of features and the fourth subset of features, and the AP supports the first subset of features, the second subset of features, the third subset of features and the fourth subset of features, the fourth set of target features is the first subset of features, the second subset of features, the third subset of features and the fourth subset of features; and/or,
in a case where the STA supports the first subset of features, the second subset of features, the third subset of features, the fourth subset of features and the fifth subset of features, and the AP supports the first subset of features and the third subset of features, the fourth set of target features is the first subset of features and the third subset of features; and/or,
in a case where the STA supports the first subset of features, the second subset of features, the third subset of features, the fourth subset of features and the fifth subset of features, and the AP supports the first subset of features, the second subset of features and the third subset of features, the fourth set of target features is the first subset of features, the second subset of features and the third subset of features; and/or,
in a case where the STA supports the first subset of features, the second subset of features, the third subset of features, the fourth subset of features and the fifth subset of features, and the AP supports the first subset of features, the second subset of features, the third subset of features and the fourth subset of features, the fourth set of target features is the first subset of features, the second subset of features, the third subset of features and the fourth subset of features; and/or,
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the fourth set of target features is the first subset of features, the second subset of features, the third subset of features, the fourth subset of features and the fifth subset of features.

In some embodiments, in a case where the STA does not support the first subset of features, the AP does not support an access of the STA; and/or,
in a case where the STA supports the first subset of features, and the AP supports the first subset of features and the third subset of features, the AP does not support the access of the STA; and/or,
in a case where the STA supports the first subset of features, and the AP supports the first subset of features, the second subset of features, and the third subset of features, the AP does not support the access of the STA; and/or,
in a case where the STA supports the first subset of features, and the AP supports the first subset of features, the second subset of features, the third subset of features, and the fourth subset of features, the AP does not support the access of the STA; and/or,
in a case where the STA supports the first subset of features, and the AP supports the first subset of features, the second subset of features, the third subset of features, the fourth subset of features, and the fifth subset of features, the AP does not support the access of the STA; and/or,
in a case where the STA supports the first subset of features and the third subset of features, and the AP supports the first subset of features, the second subset of features, the third subset of features, and the fourth subset of features, the AP does not support the access of the STA; and/or,
in a case where the STA supports the first subset of features and the third subset of features, and the AP supports the first subset of features, the second subset of features, the third subset of features, the fourth subset of features, and the fifth subset of features, the AP does not support the access of the STA; and/or,
in a case where the STA supports the first subset of features, the second subset of features, and the third subset of features, and the AP supports the first subset of features, the second subset of features, the third subset of features, and the fourth subset of features, the AP does not support the access of the STA; and/or,
in a case where the STA supports the first subset of features, the second subset of features, and the third subset of features, and the AP supports the first subset of features, the second subset of features, the third subset of features, the fourth subset of features, and the fifth subset of features, the AP does not support the access of the STA; and/or,
in a case where the STA supports the first subset of features, the second subset of features, the third subset of features and the fourth subset of features, and the AP supports the first subset of features, the second subset of features, the third subset of features, the fourth subset of features and the fifth subset of features, the AP does not support the access of the STA.

In some embodiments, the AP allows an access of STA that supports fewer set of basic service set privacy enhancement features than the set of basic service set privacy enhancement features supported by the AP.

In some embodiments, in a case where the STA supports at least the first subset of features and the AP supports at least the first subset of features, the fourth set of target features is the set of privacy enhancement features supported by the STA and the set of privacy enhancement features supported by the AP;
where the set of privacy enhancement features includes the set of client privacy enhancement features and/or the set of basic service set privacy enhancement features.

In some embodiments, in a case where the STA supports the first subset of features and the third subset of features, and the AP supports the first subset of features and the third subset of features, the fourth set of target features is the first subset of features and the third subset of features; and/or,
in a case where the STA supports the first subset of features and the third subset of features, and the AP supports the first subset of features, the second subset of features and the third subset of features, the fourth set of target features is the first subset of features and the third subset of features; and/or,
in a case where the STA supports the first subset of features and the third subset of features, and the AP supports the first subset of features, the second subset of features, the third subset of features and the fourth subset of features, the fourth set of target features is the first subset of features and the third subset of features; and/or,
in a case where the STA supports the first subset of features and the third subset of features, and the AP supports the first subset of features, the second subset of features, the third subset of features, the fourth subset of features, and the fifth subset of features, the fourth set of target features is the first subset of features and the third subset of features; and/or,
in a case where the STA supports the first subset of features, the second subset of features, and the third subset of features, and the AP supports the first subset of features and the third subset of features, the fourth set of target features is the first subset of features and the third subset of features; and/or,
in a case where the STA supports the first subset of features, the second subset of features, and the third subset of features, and the AP supports the first subset of features, the second subset of features, and the third subset of features, the fourth set of target features is the first subset of features, the second subset of features, and the third subset of features; and/or,
in a case where the STA supports the first subset of features, the second subset of features, and the third subset of features, and the AP supports the first subset of features, the second subset of features, the third subset of features, and the fourth subset of features, the fourth set of target features is the first subset of features, the second subset of features, and the third subset of features; and/or,
in a case where the STA supports the first subset of features, the second subset of features, and the third subset of features, and the AP supports the first subset of features, the second subset of features, the third subset of features, the fourth subset of features, and the fifth subset of features, the fourth set of target features is the first subset of features, the second subset of features, and the third subset of features; and/or,
in a case where the STA supports the first subset of features, the second subset of features, the third subset of features and the fourth subset of features, and the AP supports the first subset of features and the third subset of features, the fourth set of target features is the first subset of features and the third subset of features; and/or,
in a case where the STA supports the first subset of features, the second subset of features, the third subset of features, and the fourth subset of features, and the AP supports the first subset of features, the second subset of features, and the third subset of features, the fourth set of target features is the first subset of features, the second subset of features, and the third subset of features; and/or,
in a case where the STA supports the first subset of features, the second subset of features, the third subset of features and the fourth subset of features, and the AP supports the first subset of features, the second subset of features, the third subset of features and the fourth subset of features, the fourth set of target features is the first subset of features, the second subset of features, the third subset of features and the fourth subset of features; and/or,
in a case where the STA supports the first subset of features, the second subset of features, the third subset of features, and the fourth subset of features, and the AP supports the first subset of features, the second subset of features, the third subset of features, the fourth subset of features, and the fifth subset of features, the fourth set of target features is the first subset of features, the second subset of features, the third subset of features, and the fourth subset of features; and/or,
in a case where the STA supports the first subset of features, the second subset of features, the third subset of features, the fourth subset of features and the fifth subset of features, and the AP supports the first subset of features and the third subset of features, the fourth set of target features is the first subset of features and the third subset of features; and/or,
in a case where the STA supports the first subset of features, the second subset of features, the third subset of features, the fourth subset of features and the fifth subset of features, and the AP supports the first subset of features, the second subset of features and the third subset of features, the fourth set of target features is the first subset of features, the second subset of features and the third subset of features; and/or,
in a case where the STA supports the first subset of features, the second subset of features, the third subset of features, the fourth subset of features and the fifth subset of features, and the AP supports the first subset of features, the second subset of features, the third subset of features and the fourth subset of features, the fourth set of target features is the first subset of features, the second subset of features, the third subset of features and the fourth subset of features; and/or,
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the fourth set of target features is the first subset of features, the second subset of features, the third subset of features, the fourth subset of features and the fifth subset of features.

In some embodiments, in a case where the STA does not support the first subset of features, the STA does not use the privacy enhancement feature in a case of accessing the AP; and/or,
in a case where the STA supports the first subset of features, and the AP supports the first subset of features and the third subset of features, the STA does not use the privacy enhancement feature in a case of accessing the AP; and/or,
in a case where the STA supports the first subset of features, and the AP supports the first subset of features, the second subset of features, and the third subset of features, the STA does not use the privacy enhancement feature in a case of accessing the AP; and/or,
in a case where the STA supports the first subset of features, and the AP supports the first subset of features, the second subset of features, the third subset of features, and the fourth subset of features, the STA does not use the privacy enhancement feature in a case of accessing the AP; and/or,
in a case where the STA supports the first subset of features, and the AP supports the first subset of features, the second subset of features, the third subset of features, the fourth subset of features and the fifth subset of features, the STA does not use the privacy enhancement feature in a case of accessing the AP.

In some embodiments, in a case where the AP is the mobile AP, the AP supports at least the third subset of features.

In some embodiments, the STA that does not use the client privacy enhancement feature and the STA that uses the client privacy enhancement feature are not allowed to perform point-to-point signaling interaction.

In some embodiments, the communication unit may be a communication interface or a transceiver, or an input/output interface of a communication chip or a system on chip. The processing unit above may be one or more processors.

It should be understood that the AP 500 according to the embodiments of the present application may correspond to the AP in the method embodiments of the present application, and the above and other operations and/or functions of various units in the AP 500 are respectively for implementing the corresponding process of the AP in the method 300 shown in FIG. 8, which will not be repeated here for the sake of brevity.

FIG. 11 is a schematic structural diagram of a communication device 600 provided in the embodiments of the present application. The communication device 600 shown in FIG. 11 includes a processor 610, and the processor 610 may invoke a computer program from a memory and execute the computer program to implement the method in the embodiments of the present application.

In some embodiments, as shown in FIG. 11, the communication device 600 may further include a memory 620. The processor 610 may invoke a computer program from the memory 620 and execute the computer program to implement the method in the embodiments of the present application.

The memory 620 may be a separate device independent of the processor 610, or may be integrated into the processor 610.

In some embodiments, as shown in FIG. 11, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include an antenna, and the number of the antennas may be one or more.

In some embodiments, the communication device 600 may specifically be the AP of the embodiments of the present application, and the communication device 600 may implement the corresponding processes implemented by the AP in various methods of the embodiments of the present application, which will not be repeated here for the sake of brevity.

In some embodiments, the communication device 600 may specifically be the STA in the embodiments of the present application, and the communication device 600 may implement the corresponding processes implemented by the STA in various methods of the embodiments of the present application, which will not be repeated here for the sake of brevity.

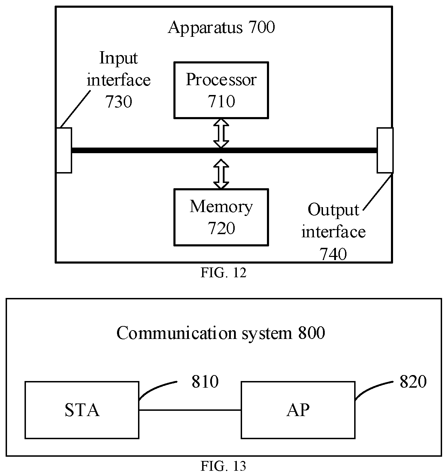

FIG. 12 is a schematic structural diagram of a device according to the embodiments of the present application. An apparatus 700 shown in FIG. 12 includes a processor 710, and the processor 710 may invoke a computer program from a memory and execute the computer program to implement the method in the embodiments of the present application.

In some embodiments, as shown in FIG. 12, the apparatus 700 may further include a memory 720. The processor 710 may invoke a computer program from the memory 720 and execute the computer program to implement the method in the embodiments of the present application.

The memory 720 may be a separate device independent of the processor 710, or may be integrated into the processor 710.

In some embodiments, the apparatus 700 may further include an input interface 730. The processor 710 may control the input interface 730 to communicate with other devices or chips, and specifically, may obtain information or data transmitted by other devices or chips.

In some embodiments, the apparatus 700 may further include an output interface 740. The processor 710 may control the output interface 740 to communicate with other devices or chips, and specifically, may output information or data to other devices or chips.

In some embodiments, the apparatus may be applied to the AP in the embodiments of the present application, and the apparatus may implement the corresponding processes implemented by the AP in the various methods of the embodiments of the present application, which will not be repeated here, for the sake of brevity.

In some embodiments, the apparatus may be applied to the STA in the embodiments of the present application, and the apparatus may implement the corresponding processes implemented by the STA in the various methods of the embodiments of the present application, which will not be repeated here for the sake of brevity.

In some embodiments, the apparatus mentioned in the embodiments of the present application may also be a chip, for example, may be a system level chip, a system chip, a chip system, or a system-on-chip chip, etc.

FIG. 13 is a schematic block diagram of a communication system 800 provided in the embodiments of the present application. As shown in FIG. 13, the communication system 800 includes a STA 810 and an AP 820.

The STA 810 may be used to implement the corresponding functions implemented by the STA in the above method, and the AP 820 may be used to implement the corresponding functions implemented by the AP in the above method, which will not be repeated here for the sake of brevity.

It should be understood that the processor of the embodiments of the present application may be an integrated circuit chip with signal processing capabilities. In the implementation process, various steps of the above method embodiments may be completed by an integrated logic circuit of hardware in a processor or an instruction in software form. The above-mentioned processor may be a general purpose processor, a digital signal processor (DSP), an application specific integrated circuit (ASIC), a field programmable gate array (FPGA) or other programmable logic devices, a discrete gate or transistor logic device, or a discrete hardware component. The various methods, steps and logic diagrams disclosed in the embodiments of the present application may be implemented or executed. The general purpose processor may be a microprocessor, or the processor may be any conventional processor or the like. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. Herein, the non-volatile memory may be a read-only memory (ROM), a programmable ROM (PROM), an erasable PROM (EPROM), an electrically EPROM (EEPROM) or a flash memory. The volatile memory may be a random access memory (RAM), which is used as an external cache. Through illustrative, rather than limiting illustration, many forms of RAMs are available, for example, a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

A computer-readable storage medium is provided for storing a computer program in the embodiments of the present application.

In some embodiments, the computer-readable storage medium may be applied to the AP in the embodiments of the present application, and the computer program causes the computer to perform the corresponding processes implemented by the AP in the various methods of the embodiments of the present application, which will not be repeated here for the sake of brevity.

In some embodiments, the computer-readable storage medium may be applied to the STA in the embodiments of the present application, and the computer program causes the computer to perform the corresponding processes implemented by the STA in the various methods of the embodiments of the present application, which will not be repeated here for the sake of brevity.

A computer program product is further provided in the embodiments of the present application, including computer program instructions.

In some embodiments, the computer program product may be applied to the AP in the embodiments of the present application, and the computer program instructions cause the computer to perform the corresponding processes implemented by the AP in the various methods of the embodiments of the present application, which will not be repeated here for the sake of brevity.

In some embodiments, the computer program product may be applied to the STA in the embodiments of the present application, and the computer program instructions cause the computer to perform the corresponding processes implemented by the STA in the various methods of the embodiments of the present application, which will not be repeated here for the sake of brevity.

A computer program is further provided in the embodiments of the present application.

In some embodiments, the computer program may be applied to the AP in the embodiments of the present application. The computer program, when executed on a computer, causes the computer to perform the corresponding processes implemented by the AP in the various methods of the embodiments of the present application, which will not be repeated here for the sake of brevity.

In some embodiments, the computer program may be applied to the STA in the embodiments of the present application. The computer program, when executed on a computer, causes the computer to perform the corresponding processes implemented by the STA in the various methods of the embodiments of the present application, which will not be repeated here for the sake of brevity.

Those ordinary skilled in the art may realize that, units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

Those skilled in the art can clearly understand that for the convenience and simplicity of description, the working processes of the systems, devices and units described above may refer to the corresponding processes in the above method embodiments, and details will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. In addition, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in one computer readable storage medium. Based on this understanding, the technical solution of the present application essentially, or a part of the technical solution that contributes to the prior art, or a part of the technical solution, may be embodied in a form of a software product, and the computer software product is stored in a storage medium, and includes a plurality of instructions to cause a computer device (which may be a personal computer, a server, or a network device, etc.) to perform all or some of steps of the methods described in the various embodiments of the present application. And, the storage medium mentioned above includes a USB flash drive (U disk), a mobile hard disk, a read-only memory (ROM), a random access memory (RAM), a diskette, or an optical disk, and various mediums that may store program codes.

The above content is only specific implementations of the present application, but the protection scope of the present application is not limited thereto, and any skill familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A wireless communication method, comprising:
maintaining, by a station (STA), a set of basic service set privacy enhancement features and/or a set of client privacy enhancement features;
wherein the set of client privacy enhancement features comprises a first subset of features and/or a second subset of features, and the set of basic service set privacy enhancement features comprises at least one of a third subset of features, a fourth subset of features or a fifth subset of features;
wherein the first subset of features comprises at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of the STA that are randomly changed; protected source address and destination address; or a protected private MAC address of the STA;
wherein the second subset of features comprises at least one of the following features: a privacy enhancement feature for preventing fingerprint analysis; a reduced beacon frame; a protected association request frame or protected association response frame and a protected reassociation request or protected reassociation response frame; a frame sequence number, a scrambler seed, a packet number for encryption and a traffic identifier (TID) of the STA that are randomly changed; or a protected MAC header;
wherein the third subset of features comprises at least one of the following features: protected source address and destination address; or a changed service set identifier (SSID);
wherein the fourth subset of features comprises at least one of the following features: a changed SSID; obfuscation of parameter information of the AP in an access point multi-link device (AP MLD) or multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
wherein the fifth subset of features comprises at least one of the following features: a sensing specific MAC address of the STA, or a ranging specific MAC address of the STA.

2. The method according to claim 1, wherein
in the set of client privacy enhancement features, the first subset of features is a subset of features that is mandatorily supported by the STA, and/or the second subset of features is a subset of features that is optionally supported by the STA; and/or
in the set of basic service set privacy enhancement features, the third subset of features is a subset of features that is optionally supported by the STA, and/or the fourth subset of features is a subset of features that is optionally supported by the STA, and/or the fifth subset of features is a subset of features that is optionally supported by the STA.

3. The method according to claim 1 or 2, further comprising:
receiving, by the STA, a first frame,
wherein the first frame comprises a first element, and the first element is used to indicate capability information related to privacy enhancement features of the AP.

4. The method according to claim 3, wherein
the first element comprises at least one of: a client privacy enhancement features supported field, a basic service set privacy enhancement features supported field, a partial basic service set privacy enhancement features supported field, a reduced scanning field, a protected association frame field, a random numbers field, an MAC header protection field, a random SSID field, an AP identity privacy enhancement field, a unicast management frame encryption field, a randomized beacon frame transmission time field, a groupcast frame privacy enhancement field, or a service specific MAC address field;
wherein the client privacy enhancement features supported field is used to indicate whether the AP supports a mandatory set of privacy enhancement features related to the STA, the basic service set privacy enhancement features supported field is used to indicate whether the AP supports a mandatory set of privacy enhancement features related to a basic service set, the partial basic service set privacy enhancement features supported field is used to indicate whether the AP supports an access of a STA that implements partial privacy enhancement features, the reduced scanning field is used to indicate whether the AP supports a reduced probe request or reduced probe response frame and a reduced beacon frame, the protected association frame field is used to indicate whether the AP supports a protected association request frame or protected association response frame and a protected reassociation request frame or protected reassociation response frame, the random numbers field is used to indicate whether the AP supports a frame sequence number, a scrambler seed, a packet number for encryption and a TID of a STA that are randomly changed, the MAC header protection field is used to indicate whether the AP supports a protected MAC header, the random SSID field is used to indicate whether the AP supports a changed SSID, the AP identity privacy enhancement field is used to indicate whether the AP supports the obfuscation of the parameter information of the AP in the AP MLD or multi-AP BSSID and the obfuscated AP identifier in the RNR, the unicast management frame encryption field is used to indicate whether the AP supports an encrypted unicast management frame, the randomized beacon frame transmission time field is used to indicate whether the AP supports a randomized beacon frame transmission time, the groupcast frame privacy enhancement field is used to indicate whether the AP supports a reception station address, a frame sequence number and a packet number for encryption that are obfuscated for groupcast frame, and the service specific MAC address field is used to indicate whether the AP supports a sensing specific MAC address of a STA and a ranging specific MAC address of a STA.

5. The method according to claim 3 or 4, wherein the first element is an extended capabilities element, or the first element is a robust security network element, or the first element is a robust security network extension element, or the first element is a newly defined enhanced privacy capabilities element.

6. The method according to any one of claims 3 to 5, wherein the first frame is at least one of:
a beacon frame, a probe response frame, an association response frame, or a reassociation response frame.

7. The method according to any one of claims 1 to 6, further comprising:
performing, by the STA, signaling interaction with the AP using a first set of target features,
wherein the first set of target features is an intersection of a set of client privacy enhancement features supported by the STA and a set of client privacy enhancement features supported by the AP.

8. The method according to claim 7, wherein
in a case where the STA supports the first subset of features and the AP supports the first subset of features, the first set of target features is the first subset of features; and/or
in a case where the STA supports the first subset of features and the AP supports the first subset of features and the second subset of features, the first set of target features is the first subset of features; and/or
in a case where the STA supports the first subset of features and the second subset of features and the AP supports the first subset of features, the first set of target features is the first subset of features; and/or
in a case where the STA supports the first subset of features and the second subset of features and the AP supports the first subset of features and the second subset of features, the first set of target features is the first subset of features and the second subset of features.

9. The method according to claim 7, wherein an AP that supports client privacy enhancement features do not allow an access of a STA that does not support the client privacy enhancement features.

10. The method according to claim 9, wherein
in a case where the STA does not support the first subset of features and the AP supports the first subset of features, the STA does not use the first subset of features to perform the signaling interaction with the AP; and/or
in a case where the STA does not support the first subset of features and the AP supports the first subset of features and the second subset of features, the STA does not use the first subset of features and the second subset of features to perform the signaling interaction with the AP.

11. The method according to any one of claims 1 to 6, further comprising:
performing, by the STA, signaling interaction with the AP using a second set of target features,
wherein the second set of target features is part or all of a set of privacy enhancement features supported by the AP, and the set of privacy enhancement features comprises a set of basic service set privacy enhancement features and/or a set of client privacy enhancement features.

12. The method according to claim 11, wherein the AP does not allow an access of a STA that supports fewer set of basic service set privacy enhancement features than the set of basic service set privacy enhancement features supported by the AP.

13. The method according to claim 12, wherein
in a case where the STA supports the first subset of features and the third subset of features, and the AP supports the first subset of features and the third subset of features, the second set of target features is the first subset of features and the third subset of features; and/or
in a case where the STA supports the first subset of features and the third subset of features, and the AP supports the first subset of features, the second subset of features and the third subset of features, the second set of target features is the first subset of features and the third subset of features; and/or
in a case where the STA supports the first subset of features, the second subset of features and the third subset of features, and the AP supports the first subset of features and the third subset of features, the second set of target features is the first subset of features and the third subset of features; and/or
in a case where the STA supports the first subset of features, the second subset of features and the third subset of features, and the AP supports the first subset of features, the second subset of features and the third subset of features, the second set of target features is the first subset of features, the second subset of features and the third subset of features; and/or
in a case where the STA supports the first subset of features, the second subset of features, the third subset of features and the fourth subset of features, and the AP supports the first subset of features and the third subset of features, the second set of target features is the first subset of features and the third subset of features; and/or
in a case where the STA supports the first subset of features, the second subset of features, the third subset of features and the fourth subset of features, and the AP supports the first subset of features, the second subset of features and the third subset of features, the second set of target features is the first subset of features, the second subset of features and the third subset of features; and/or
in a case where the STA supports the first subset of features, the second subset of features, the third subset of features and the fourth subset of features, and the AP supports the first subset of features, the second subset of features, the third subset of features and the fourth subset of features, the second set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features and the third subset of features, the second set of target features is the first subset of features and the third subset of features; and/or
in a case where the STA supports the first subset of features, the second subset of features, the third subset of features, the fourth subset of features and the fifth subset of features, and the AP supports the first subset of features, the second subset of features and the third subset of features, the second set of target features is the first subset of features, the second subset of features and the third subset of features; and/or
in a case where the STA supports the first subset of features, the second subset of features, the third subset of features, the fourth subset of features and the fifth subset of features, and the AP supports the first subset of features, the second subset of features, the third subset of features and the fourth subset of features, the second set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the second set of target features is the first subset of features, the second subset of features, the third subset of features, the fourth subset of features and the fifth subset of features.

14. The method according to claim 12, wherein
in a case where the STA does not support the first subset of features, the AP does not support an access of the STA; and/or
in a case where the STA supports the first subset of features, and the AP supports the first subset of features and the third subset of features, the AP does not support the access of the STA; and/or
in a case where the STA supports the first subset of features, and the AP supports the first subset of features, the second subset of features and the third subset of features, the AP does not support the access of the STA; and/or
in a case where the STA supports the first subset of features, and the AP supports the first subset of features, the second subset of features, the third subset of features and the fourth subset of features, the AP does not support the access of the STA; and/or
in a case where the STA supports the first subset of features, and the AP supports the first subset of features, the second subset of features, the third subset of features, the fourth subset of features and the fifth subset of features, the AP does not support the access of the STA; and/or
in a case where the STA supports the first subset of features and the third subset of features, and the AP supports the first subset of features, the second subset of features, the third subset of features and the fourth subset of features, the AP does not support the access of the STA; and/or
in a case where the STA supports the first subset of features and the third subset of features, and the AP supports the first subset of features, the second subset of features, the third subset of features, the fourth subset of features and the fifth subset of features, the AP does not support the access of the STA; and/or
in a case where the STA supports the first subset of features, the second subset of features and the third subset of features, and the AP supports the first subset of features, the second subset of features, the third subset of features and the fourth subset of features, the AP does not support the access of the STA; and/or
in a case where the STA supports the first subset of features, the second subset of features and the third subset of features, and the AP supports the first subset of features, the second subset of features, the third subset of features, the fourth subset of features and the fifth subset of features, the AP does not support the access of the STA; and/or
in a case where the STA supports the first subset of features, the second subset of features, the third subset of features and the fourth subset of features, and the AP supports the first subset of features, the second subset of features, the third subset of features, the fourth subset of features and the fifth subset of features, the AP does not support the access of the STA.

15. The method according to claim 11, wherein the AP allows an access of a STA that supports fewer set of basic service set privacy enhancement features than the set of basic service set privacy enhancement features supported by the AP.

16. The method according to claim 15, wherein
in a case where the STA supports at least the first subset of features and the AP supports at least the first subset of features, the second set of target features is an intersection of the set of privacy enhancement features supported by the STA and the set of privacy enhancement features supported by the AP;
wherein the set of privacy enhancement features comprises the set of client privacy enhancement features and/or the set of basic service set privacy enhancement features.

17. The method according to claim 15 or 16, wherein
in a case where the STA supports the first subset of features and the third subset of features, and the AP supports the first subset of features and the third subset of features, the second set of target features is the first subset of features and the third subset of features; and/or
in a case where the STA supports the first subset of features and the third subset of features, and the AP supports the first subset of features, the second subset of features and the third subset of features, the second set of target features is the first subset of features and the third subset of features; and/or
in a case where the STA supports the first subset of features and the third subset of features, and the AP supports the first subset of features, the second subset of features, the third subset of features and the fourth subset of features, the second set of target features is the first subset of features and the third subset of features; and/or
in a case where the STA supports the first subset of features and the third subset of features, and the AP supports the first subset of features, the second subset of features, the third subset of features, the fourth subset of features and the fifth subset of features, the second set of target features is the first subset of features and the third subset of features; and/or
in a case where the STA supports the first subset of features, the second subset of features and the third subset of features, and the AP supports the first subset of features and the third subset of features, the second set of target features is the first subset of features and the third subset of features; and/or
in a case where the STA supports the first subset of features, the second subset of features and the third subset of features, and the AP supports the first subset of features, the second subset of features and the third subset of features, the second set of target features is the first subset of features, the second subset of features and the third subset of features; and/or
in a case where the STA supports the first subset of features, the second subset of features and the third subset of features, and the AP supports the first subset of features, the second subset of features, the third subset of features and the fourth subset of features, the second set of target features is the first subset of features, the second subset of features and the third subset of features; and/or
in a case where the STA supports the first subset of features, the second subset of features and the third subset of features, and the AP supports the first subset of features, the second subset of features, the third subset of features, the fourth subset of features and the fifth subset of features, the second set of target features is the first subset of features, the second subset of features and the third subset of features; and/or
in a case where the STA supports the first subset of features, the second subset of features, the third subset of features and the fourth subset of features, and the AP supports the first subset of features and the third subset of features, the second set of target features is the first subset of features and the third subset of features; and/or
in a case where the STA supports the first subset of features, the second subset of features, the third subset of features and the fourth subset of features, and the AP supports the first subset of features, the second subset of features and the third subset of features, the second set of target features is the first subset of features, the second subset of features, and the third subset of features; and/or
in a case where the STA supports the first subset of features, the second subset of features, the third subset of features and the fourth subset of features, and the AP supports the first subset of features, the second subset of features, the third subset of features and the fourth subset of features, the second set of target features is the first subset of features, the second subset of features, the third subset of features and the fourth subset of features; and/or
in a case where the STA supports the first subset of features, the second subset of features, the third subset of features and the fourth subset of features, and the AP supports the first subset of features, the second subset of features, the third subset of features, the fourth subset of features and the fifth subset of features, the second set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features and the third subset of features, the second set of target features is the first subset of features and the third subset of features; and/or
in a case where the STA supports the first subset of features, the second subset of features, the third subset of features, the fourth subset of features and the fifth subset of features, and the AP supports the first subset of features, the second subset of features and the third subset of features, the second set of target features is the first subset of features, the second subset of features and the third subset of features; and/or
in a case where the STA supports the first subset of features, the second subset of features, the third subset of features, the fourth subset of features and the fifth subset of features, and the AP supports the first subset of features, the second subset of features, the third subset of features and the fourth subset of features, the second set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the second set of target features is the first subset of features, the second subset of features, the third subset of features, the fourth subset of features and the fifth subset of features.

18. The method according to claim 15, wherein
in a case where the STA does not support the first subset of features, the STA does not use privacy enhancement features in a case of accessing the AP; and/or
in a case where the STA supports the first subset of features, and the AP supports the first subset of features and the third subset of features, the STA does not use the privacy enhancement features in the case of accessing the AP; and/or
in a case where the STA supports the first subset of features, and the AP supports the first subset of features, the second subset of features and the third subset of features, the STA does not use the privacy enhancement features in the case of accessing the AP; and/or
in a case where the STA supports the first subset of features, and the AP supports the first subset of features, the second subset of features, the third subset of features and the fourth subset of features, the STA does not use the privacy enhancement features in the case of accessing the AP; and/or
in a case where the STA supports the first subset of features, and the AP supports the first subset of features, the second subset of features, the third subset of features, the fourth subset of features and the fifth subset of features, the STA does not use the privacy enhancement features in the case of accessing the AP.

19. The method according to any one of claims 7 to 18, wherein
in a case where the AP is a mobile AP, the AP supports at least the third subset of features.

20. The method according to any one of claims 1 to 19, wherein a STA that does not use client privacy enhancement features and a STA that uses client privacy enhancement features are not allowed to perform point-to-point signaling interaction.

21. A wireless communication method, comprising:
maintaining, by an access point (AP), a set of basic service set privacy enhancement features and/or a set of client privacy enhancement features;
wherein the set of client privacy enhancement features comprises a first subset of features and/or a second subset of features, and the set of basic service set privacy enhancement features comprises at least one of a third subset of features, a fourth subset of features or a fifth subset of features;
wherein the first subset of features comprises at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of a station (STA) that are randomly changed; protected source address and destination address; or a protected private MAC address of the STA;
wherein the second subset of features comprises at least one of the following features: a privacy enhancement feature for preventing fingerprint analysis; a reduced beacon frame; a protected association request frame or protected association response frame and a protected reassociation request or protected reassociation response frame; a frame sequence number, a scrambler seed, a packet number for encryption and a traffic identifier (TID) of the STA that are randomly changed; or a protected MAC header;
wherein the third subset of features comprises at least one of the following features: protected source address and destination address; or a changed service set identifier (SSID);
wherein the fourth subset of features comprises at least one of the following features: a changed SSID; obfuscation of parameter information of the AP in an access point multi-link device (AP MLD) or multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
wherein the fifth subset of features comprises at least one of the following features: a sensing specific MAC address of the STA, or a ranging specific MAC address of the STA.

22. The method according to claim 21, wherein
in the set of client privacy enhancement features, the first subset of features is a subset of features that is mandatorily supported by the AP, and/or the second subset of features is a subset of features that is optionally supported by the AP, or the second subset of features is a subset of features that is mandatorily supported by the AP; and/or
in the set of basic service set privacy enhancement features, the third subset of features is a subset of features that is mandatorily supported by a mobile AP, and/or the fourth subset of features is a subset of features that is optionally supported by the AP, and/or the fifth subset of features is a subset of features that is optionally supported by the AP.

23. The method according to claim 21 or 22, further comprising:
receiving, by the AP, a second frame,
wherein the second frame comprises a second element, and the second element is used to indicate capability information related to privacy enhancement features of the STA.

24. The method according to claim 23, wherein
the second element comprises at least one of: a client privacy enhancement features supported field, a basic service set privacy enhancement features supported field, a partial basic service set privacy enhancement features supported field, a reduced scanning field, a protected association frame field, a random numbers field, an MAC header protection field, a random SSID field, an AP identity privacy enhancement field, a unicast management frame encryption field, a randomized beacon frame transmission time field, a groupcast frame privacy enhancement field, or a service specific MAC address field;
wherein the client privacy enhancement features supported field is used to indicate whether the STA supports a mandatory set of privacy enhancement features related to the STA, the basic service set privacy enhancement features supported field is used to indicate whether the STA supports a mandatory set of privacy enhancement features related to a basic service set, the partial basic service set privacy enhancement features supported field is used to indicate whether the STA supports an access of a STA that implements partial privacy enhancement features, the reduced scanning field is used to indicate whether the STA supports a reduced probe request or reduced probe response frame and a reduced beacon frame, the protected association frame field is used to indicate whether the STA supports a protected association request frame or protected association response frame and a protected reassociation request frame or protected reassociation response frame, the random numbers field is used to indicate whether the STA supports a frame sequence number, a scrambler seed, a packet number for encryption and a TID of a STA that are randomly changed, the MAC header protection field is used to indicate whether the STA supports a protected MAC header, the random SSID field is used to indicate whether the STA supports a changed SSID, the AP identity privacy enhancement field is used to indicate whether the STA supports the obfuscation of the parameter information of the AP in the AP MLD or multi-AP BSSID and the obfuscated AP identifier in the RNR, the unicast management frame encryption field is used to indicate whether the STA supports an encrypted unicast management frame, the randomized beacon frame transmission time field is used to indicate whether the STA supports a randomized beacon frame transmission time, the groupcast frame privacy enhancement field is used to indicate whether the STA supports a reception station address, a frame sequence number and a packet number for encryption that are obfuscated for groupcast frame, and the service specific MAC address field is used to indicate whether the STA supports a sensing specific MAC address of a STA and a ranging specific MAC address of a STA.

25. The method according to claim 23 or 24, wherein the second element is an extended capabilities element, or the second element is a robust security network element, or the second element is a robust security network extension element, or the second element is a newly defined enhanced privacy capabilities element.

26. The method according to any one of claims 23 to 25, wherein the second frame is at least one of:
a probe request frame, an association request frame, or a reassociation request frame.

27. The method according to any one of claims 21 to 26, further comprising:
performing, by the AP, signaling interaction with the STA using a third set of target features,
wherein the third set of target features is an intersection of a set of client privacy enhancement features supported by the AP and a set of client privacy enhancement features supported by the STA.

28. The method according to claim 27, wherein
in a case where the STA supports the first subset of features and the AP supports the first subset of features, the third set of target features is the first subset of features; and/or
in a case where the STA supports the first subset of features and the AP supports the first subset of features and the second subset of features, the third set of target features is the first subset of features; and/or
in a case where the STA supports the first subset of features and the second subset of features and the AP supports the first subset of features, the third set of target features is the first subset of features; and/or
in a case where the STA supports the first subset of features and the second subset of features and the AP supports the first subset of features and the second subset of features, the third set of target features is the first subset of features and the second subset of features.

29. The method according to claim 27, wherein an AP that supports client privacy enhancement features do not allow an access of a STA that does not support the client privacy enhancement features.

30. The method according to claim 29, wherein
in a case where the STA does not support the first subset of features and the AP supports the first subset of features, the AP does not use the third subset of features to perform the signaling interaction with the STA; and/or
in a case where the STA does not support the first subset of features and the AP supports the first subset of features and the second subset of features, the AP does not use the third subset of features and the second subset of features to perform the signaling interaction with the STA.

31. The method according to any one of claims 21 to 26, further comprising:
performing, by the AP, signaling interaction with the STA using a fourth set of target features,
wherein the fourth set of target features is part or all of a set of privacy enhancement features supported by the AP, and the set of privacy enhancement features comprises a set of basic service set privacy enhancement features and/or a set of client privacy enhancement features.

32. The method according to claim 31, wherein the AP does not allow an access of a STA that supports fewer set of basic service set privacy enhancement features than the set of basic service set privacy enhancement features supported by the AP.

33. The method according to claim 32, wherein
in a case where the STA supports the first subset of features and the third subset of features, and the AP supports the first subset of features and the third subset of features, the fourth set of target features is the first subset of features and the third subset of features; and/or
in a case where the STA supports the first subset of features and the third subset of features, and the AP supports the first subset of features, the second subset of features and the third subset of features, the fourth set of target features is the first subset of features and the third subset of features; and/or
in a case where the STA supports the first subset of features, the second subset of features, and the third subset of features, and the AP supports the first subset of features and the third subset of features, the fourth set of target features is the first subset of features and the third subset of features; and/or
in a case where the STA supports the first subset of features, the second subset of features, and the third subset of features, and the AP supports the first subset of features, the second subset of features, and the third subset of features, the fourth set of target features is the first subset of features, the second subset of features, and the third subset of features; and/or
in a case where the STA supports the first subset of features, the second subset of features, the third subset of features and the fourth subset of features, and the AP supports the first subset of features and the third subset of features, the fourth set of target features is the first subset of features and the third subset of features; and/or
in a case where the STA supports the first subset of features, the second subset of features, the third subset of features, and the fourth subset of features, and the AP supports the first subset of features, the second subset of features, and the third subset of features, the fourth set of target features is the first subset of features, the second subset of features, and the third subset of features; and/or
in a case where the STA supports the first subset of features, the second subset of features, the third subset of features and the fourth subset of features, and the AP supports the first subset of features, the second subset of features, the third subset of features and the fourth subset of features, the fourth set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features and the third subset of features, the fourth set of target features is the first subset of features and the third subset of features; and/or
in a case where the STA supports the first subset of features, the second subset of features, the third subset of features, the fourth subset of features and the fifth subset of features, and the AP supports the first subset of features, the second subset of features and the third subset of features, the fourth set of target features is the first subset of features, the second subset of features and the third subset of features; and/or
in a case where the STA supports the first subset of features, the second subset of features, the third subset of features, the fourth subset of features and the fifth subset of features, and the AP supports the first subset of features, the second subset of features, the third subset of features and the fourth subset of features, the fourth set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the fourth set of target features is the first subset of features, the second subset of features, the third subset of features, the fourth subset of features and the fifth subset of features.

34. The method according to claim 32, wherein
in a case where the STA does not support the first subset of features, the AP does not support an access of the STA; and/or
in a case where the STA supports the first subset of features, and the AP supports the first subset of features and the third subset of features, the AP does not support the access of the STA; and/or
in a case where the STA supports the first subset of features, and the AP supports the first subset of features, the second subset of features and the third subset of features, the AP does not support the access of the STA; and/or
in a case where the STA supports the first subset of features, and the AP supports the first subset of features, the second subset of features, the third subset of features and the fourth subset of features, the AP does not support the access of the STA; and/or
in a case where the STA supports the first subset of features, and the AP supports the first subset of features, the second subset of features, the third subset of features, the fourth subset of features and the fifth subset of features, the AP does not support the access of the STA; and/or
in a case where the STA supports the first subset of features and the third subset of features, and the AP supports the first subset of features, the second subset of features, the third subset of features and the fourth subset of features, the AP does not support the access of the STA; and/or
in a case where the STA supports the first subset of features and the third subset of features, and the AP supports the first subset of features, the second subset of features, the third subset of features, the fourth subset of features and the fifth subset of features, the AP does not support the access of the STA; and/or
in a case where the STA supports the first subset of features, the second subset of features and the third subset of features, and the AP supports the first subset of features, the second subset of features, the third subset of features and the fourth subset of features, the AP does not support the access of the STA; and/or
in a case where the STA supports the first subset of features, the second subset of features and the third subset of features, and the AP supports the first subset of features, the second subset of features, the third subset of features, the fourth subset of features and the fifth subset of features, the AP does not support the access of the STA; and/or
in a case where the STA supports the first subset of features, the second subset of features, the third subset of features and the fourth subset of features, and the AP supports the first subset of features, the second subset of features, the third subset of features, the fourth subset of features and the fifth subset of features, the AP does not support the access of the STA.

35. The method according to claim 31, wherein the AP allows an access of a STA that supports fewer set of basic service set privacy enhancement features than the set of basic service set privacy enhancement features supported by the AP.

36. The method according to claim 35, wherein
in a case where the STA supports at least the first subset of features and the AP supports at least the first subset of features, the fourth set of target features is an intersection of the set of privacy enhancement features supported by the STA and the set of privacy enhancement features supported by the AP;
wherein the set of privacy enhancement features comprises the set of client privacy enhancement features and/or the set of basic service set privacy enhancement features.

37. The method according to claim 35 or 36, wherein
in a case where the STA supports the first subset of features and the third subset of features, and the AP supports the first subset of features and the third subset of features, the fourth set of target features is the first subset of features and the third subset of features; and/or
in a case where the STA supports the first subset of features and the third subset of features, and the AP supports the first subset of features, the second subset of features and the third subset of features, the fourth set of target features is the first subset of features and the third subset of features; and/or
in a case where the STA supports the first subset of features and the third subset of features, and the AP supports the first subset of features, the second subset of features, the third subset of features and the fourth subset of features, the fourth set of target features is the first subset of features and the third subset of features; and/or
in a case where the STA supports the first subset of features and the third subset of features, and the AP supports the first subset of features, the second subset of features, the third subset of features, the fourth subset of features and the fifth subset of features, the fourth set of target features is the first subset of features and the third subset of features; and/or
in a case where the STA supports the first subset of features, the second subset of features and the third subset of features, and the AP supports the first subset of features and the third subset of features, the fourth set of target features is the first subset of features and the third subset of features; and/or
in a case where the STA supports the first subset of features, the second subset of features and the third subset of features, and the AP supports the first subset of features, the second subset of features and the third subset of features, the fourth set of target features is the first subset of features, the second subset of features and the third subset of features; and/or
in a case where the STA supports the first subset of features, the second subset of features and the third subset of features, and the AP supports the first subset of features, the second subset of features, the third subset of features and the fourth subset of features, the fourth set of target features is the first subset of features, the second subset of features and the third subset of features; and/or
in a case where the STA supports the first subset of features, the second subset of features and the third subset of features, and the AP supports the first subset of features, the second subset of features, the third subset of features, the fourth subset of features and the fifth subset of features, the fourth set of target features is the first subset of features, the second subset of features and the third subset of features; and/or
in a case where the STA supports the first subset of features, the second subset of features, the third subset of features and the fourth subset of features, and the AP supports the first subset of features and the third subset of features, the fourth set of target features is the first subset of features and the third subset of features; and/or
in a case where the STA supports the first subset of features, the second subset of features, the third subset of features and the fourth subset of features, and the AP supports the first subset of features, the second subset of features and the third subset of features, the fourth set of target features is the first subset of features, the second subset of features and the third subset of features; and/or
in a case where the STA supports the first subset of features, the second subset of features, the third subset of features and the fourth subset of features, and the AP supports the first subset of features, the second subset of features, the third subset of features and the fourth subset of features, the fourth set of target features is the first subset of features, the second subset of features, the third subset of features and the fourth subset of features; and/or
in a case where the STA supports the first subset of features, the second subset of features, the third subset of features and the fourth subset of features, and the AP supports the first subset of features, the second subset of features, the third subset of features, the fourth subset of features, and the fifth subset of features, the fourth set of target features is the first subset of features, the second subset of features, the third subset of features, and the fourth subset of features; and/or
in a case where the STA supports the first subset of features, the second subset of features, the third subset of features, the fourth subset of features and the fifth subset of features, and the AP supports the first subset of features and the third subset of features, the fourth set of target features is the first subset of features and the third subset of features; and/or
in a case where the STA supports the first subset of features, the second subset of features, the third subset of features, the fourth subset of features and the fifth subset of features, and the AP supports the first subset of features, the second subset of features and the third subset of features, the fourth set of target features is the first subset of features, the second subset of features and the third subset of features; and/or
in a case where the STA supports the first subset of features, the second subset of features, the third subset of features, the fourth subset of features and the fifth subset of features, and the AP supports the first subset of features, the second subset of features, the third subset of features and the fourth subset of features, the fourth set of target features is the first subset of features, the second subset of features, the third subset of features and the fourth subset of features; and/or
in a case where the STA supports the first subset of features, the second subset of features, the third subset of features, the fourth subset of features and the fifth subset of features, and the AP supports the first subset of features, the second subset of features, the third subset of features, the fourth subset of features and the fifth subset of features, the fourth set of target features is the first subset of features, the second subset of features, the third subset of features, the fourth subset of features and the fifth subset of features.

38. The method according to claim 35, wherein
in a case where the STA does not support the first subset of features, the STA does not use privacy enhancement features in a case of accessing the AP; and/or
in a case where the STA supports the first subset of features, and the AP supports the first subset of features and the third subset of features, the STA does not use the privacy enhancement features in the case of accessing the AP; and/or
in a case where the STA supports the first subset of features, and the AP supports the first subset of features, the second subset of features and the third subset of features, the STA does not use the privacy enhancement features in the case of accessing the AP; and/or
in a case where the STA supports the first subset of features, and the AP supports the first subset of features, the second subset of features, the third subset of features and the fourth subset of features, the STA does not use the privacy enhancement features in the case of accessing the AP; and/or
in a case where the STA supports the first subset of features, and the AP supports the first subset of features, the second subset of features, the third subset of features, the fourth subset of features and the fifth subset of features, the STA does not use the privacy enhancement features in the case of accessing the AP.

39. The method according to any one of claims 21 to 38, wherein
in a case where the AP is a mobile AP, the AP supports at least the third subset of features.

40. The method according to any one of claims 21 to 39, wherein a STA that does not use client privacy enhancement features and a STA that uses client privacy enhancement features are not allowed to perform point-to-point signaling interaction.

41. A station (STA), comprising:
a processing unit, configured to maintain a set of basic service set privacy enhancement features and/or a set of client privacy enhancement features;
wherein the set of client privacy enhancement features comprises a first subset of features and/or a second subset of features, and the set of basic service set privacy enhancement features comprises at least one of a third subset of features, a fourth subset of features or a fifth subset of features;
wherein the first subset of features comprises at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of the STA that are randomly changed; protected source address and destination address; or a protected private MAC address of the STA;
wherein the second subset of features comprises at least one of the following features: a privacy enhancement feature for preventing fingerprint analysis; a reduced beacon frame; a protected association request frame or protected association response frame and a protected reassociation request or protected reassociation response frame; a frame sequence number, a scrambler seed, a packet number for encryption and a traffic identifier (TID) of the STA that are randomly changed; or a protected MAC header;
wherein the third subset of features comprises at least one of the following features: protected source address and destination address; or a changed service set identifier (SSID);
wherein the fourth subset of features comprises at least one of the following features: a changed SSID; obfuscation of parameter information of the AP in an access point multi-link device (AP MLD) or multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
wherein the fifth subset of features comprises at least one of the following features: a sensing specific MAC address of the STA, or a ranging specific MAC address of the STA.

42. An access point (AP), comprising:
a processing unit, configured to maintain a set of basic service set privacy enhancement features and/or a set of client privacy enhancement features;
wherein the set of client privacy enhancement features comprises a first subset of features and/or a second subset of features, and the set of basic service set privacy enhancement features comprises at least one of a third subset of features, a fourth subset of features or a fifth subset of features;
wherein the first subset of features comprises at least one of the following features: a privacy enhancement feature related to a medium access control (MAC) address or identifier; a security key established in a pre-association authentication; an over the air medium access control (OTA MAC) address, and an association identifier (AID) or unassociation identifier (UID) of a station (STA) that are randomly changed; protected source address and destination address; or a protected private MAC address of the STA;
wherein the second subset of features comprises at least one of the following features: a privacy enhancement feature for preventing fingerprint analysis; a reduced beacon frame; a protected association request frame or protected association response frame and a protected reassociation request or protected reassociation response frame; a frame sequence number, a scrambler seed, a packet number for encryption and a traffic identifier (TID) of the STA that are randomly changed; or a protected MAC header;
wherein the third subset of features comprises at least one of the following features: protected source address and destination address; or a changed service set identifier (SSID);
wherein the fourth subset of features comprises at least one of the following features: a changed SSID; obfuscation of parameter information of the AP in an access point multi-link device (AP MLD) or multi-AP basic service set identifier (BSSID); an obfuscated AP identifier in a reduced neighbor report (RNR); randomized beacon frame transmission time; an encrypted unicast management frame; or a reception station address, a frame sequence number and a packet number for encryption that are obfuscated for groupcast frame; and
wherein the fifth subset of features comprises at least one of the following features: a sensing specific MAC address of the STA, or a ranging specific MAC address of the STA.

43. A STA, comprising: a processor and a memory, wherein the memory is configured to store a computer program, and the processor is configured to call and run the computer program stored in the memory, causes the STA to perform the method according to any one of claims 1 to 20.

44. An AP, comprising: a processor and a memory, wherein the memory is configured to store a computer program, and the processor is configured to call and run the computer program stored in the memory, causes the AP to perform the method according to any one of claims 21 to 40.

45. A chip, comprising: a processor, configured to call a computer program from a memory and run the computer program, causes a device equipped with the chip to perform the method according to any one of claims 1 to 20.

46. A chip, comprising: a processor, configured to call a computer program from a memory and run the computer program, causes a device equipped with the chip to perform the method according to any one of claims 21 to 40.

47. A computer-readable storage medium, configured to store a computer program, wherein the computer program causes a computer to perform the method according to any one of claims 1 to 20.

48. A computer-readable storage medium, configured to store a computer program, wherein the computer program causes a computer to perform the method according to any one of claims 21 to 40.

49. A computer program product, comprises computer program instructions, wherein the computer program instructions cause a computer to perform the method according to any one of claims 1 to 20.

50. A computer program product, comprises computer program instructions, wherein the computer program instructions cause a computer to perform the method according to any one of claims 21 to 40.

51. A computer program, wherein the computer program causes a computer to perform the method according to any one of claims 1 to 20.

52. A computer program, wherein the computer program causes a computer to perform the method according to any one of claims 21 to 40.
